# EUROPEAN PATENT APPLICATION

(11) **EP 4 769 857 A1**
(43) Date of publication of application: **01.07.2026**
(21) Application number: 24859006.9
(22) Date of filing: 18.03.2024
(51) Int. Cl.: H02G 9/04

(54) **BRANCHING TROUGH, BENT TROUGH, BRANCHING TROUGH CONNECTION STRUCTURE, TROUGH LINE, BRANCHING TROUGH FIXING STRUCTURE, BENT TROUGH FIXING STRUCTURE, AND METHOD FOR CONNECTING CABLE PROTECTION MEMBER TO BRANCHING TROUGH**

(30) Priority: 25.08.2023 JP 2023137553
(71) Applicant: FURUKAWA ELECTRIC CO., LTD., Tokyo 100-8322 (JP)
(72) Inventor: HORI, Takashi, Tokyo 100-8322 (JP); KOZAWA, Satoshi, Tokyo 100-8322 (JP); SHIRAYAMA, Yuichi, Tokyo 100-8322 (JP)
(74) Representative: Goddar, Heinz J.
(86) International application number: PCT/JP2024/010570
(87) International publication number: WO 2025/046956

(57) **Abstract**

A branching trough (1) is mainly comprises side plates (7) forming both side surfaces, and a bottom plate (5) constituting a bottom surface, wherein both side plates (7) are erected upright so as to surround the bottom plate (5) A cross section of the branching trough (1) is substantially U-shaped, and the branching trough (1) is substantially T-shaped in a plan view. A female joining structure (23a) for connecting a cable protection member is formed in openings (15a) at both longitudinal direction ends of a main trunk section (9). Similarly, a female joining structure (23b) for connecting a cable protection member is formed in an opening (15b) at the leading end of a branch section (11),. A vertical rib (21) of an elbow section (17) of the side plates (7) can also serve as a vertical rib inside the female joining structure (23a). On the back surface of the main trunk section (9) and the branch section (11), a hollow columnar protrusion (27) protruding downward to a prescribed height from the bottom plate (5) is formed at a prescribed position of the space described above. The present invention also includes a bent trough 41 having a similar hollow columnar protrusion (67) and female joining structure (57) in which an elbow section (51) of a side plate (47) also serves as a vertical rib (55) inside the female joinng structure.

## Description

### TECHNICAL FIELD

The present invention relates to a substantially T-shaped branching trough and a bent trough in which cables are laid. The present invention also relates to a branching trough connection structure, trough lines, a branching trough fixing structure, a bent trough fixing structure, and a method for connecting a cable protection member to the branching trough, in which the branching trough and the bent trough are used.

### BACKGROUND OF THE INVENTION

In recent years, various types of structures for laying cables to be used for power transmission or the like have been proposed. For example, a trough line in which resin-made troughs are installed and cables are laid inside the troughs has been proposed.

As troughs to be used in such the trough line, Patent Document 1 has proposed a trough for laying branching cables, in which the trough includes a trough body having a cutout part on a side surface, and a branching trough of which one end corresponds to the cutout part is to be joined to the cutout part. The trough proposed in Patent Document 1 has long grooves on cutting sections of the cutout part, and joining faces with the cutout of the branching trough are closed by a gate plate, which is set to be freely inserted or removed from the long grooves.

Also, Patent Document 2 has proposed a trough for laying branching cables, in which a trough body having an opening on a side surface is integrally formed with a branching trough of which one end faces the opening and is joined to the opening. The trough proposed in Patent Document 2 is different from the one proposed in Patent Document 1 in that the parts of the structure are not separated but are integrally formed.

Also, Patent Document 3 has proposed a trough including a bottom plate with a U-shaped groove and side surfaces that can be assembled easily on site, thereby achieving volume reduction in storage. The trough proposed in Patent Document 3 uses plastic material, thereby achieving weight reduction and, at the same time, facilitating branching by preparing the trough by providing holes on side wall parts thereof in advance. Also, recycled material is used for a part or all of the plastic material, thereby suppressing an increase in the cost.

Also, Patent Document 4 has proposed a cable trough in which each end part of a trough body with directivity has a concave-shaped joining part formed, and a U-shaped interconnecting member connects the concave-shaped joining parts of the adjacent troughs. The trough proposed in Patent Document 4 can be used when a base end and a tip end of the body are turned over such that the trough can be curved or branched either to the left or to the right side. Thus, it is unnecessary to prepare two types of troughs for the right-side curve (right-side bend) and the left-side curve (left-side bend).

Also, Patent Document 5 has proposed a trough-connecting component into which a substantially cylindrical cable protector for accommodating and protecting various types of cables can be inserted and connected. In Patent Document 5, a main body of the trough-connecting component, which is a cable-protector-connecting component that is disposed at a connection part of the cable protector, is formed in a hollow box shape by combining a body and an upper lid made of synthetic resin. Also, an inner rib and an outer rib are provided as a cutting guideline on side wall faces of the main body of the trough-connecting component, and an opening that corresponds to a cable protector to be connected is formed by cutting along the inner rib and the outer rib. The cable protector can be inserted into the opening to be connected.

Also, Patent Document 6 has proposed a bent trough having a male joining structure on each end thereof. The bent trough in Patent Document 6 can be interconnected with another trough by fitting a female joining structure provided on an end part of the other trough to the male joining structure on the end part of the bent trough.

### RELATED APPLICATIONS

[Patent Document 1] Japanese Unexamined Utility Model Application Publication No. S61-98328 (JP-UM-A- S61-98328)
[Patent Document 2] Japanese Unexamined Utility Model Application Publication No. S61-982329 (JP-UM-A- S61-982329)
[Patent Document 3] Japanese Unexamined Patent Application Publication No. 2005-245186 (JP-A-2005-245186)
[Patent Document 4] Japanese Unexamined Utility Model Application Publication No. H6-5334 (JP-UM-A- H6-5334)
[Patent Document 5] Japanese Unexamined Utility Model Application Publication No. H6-024321 (JP-UM-A- H6-024321)
[Patent Document 6] US2020/0277739 A1

### SUMMARY OF THE INVENTION

### (PROBLEMS TO BE SOLVED BY THE INVENTION)

However, in Patent Documents 1 to 6, there is no description of a structure in which a horizontal rib, which is provided at an upper part of an elbow section, links both sides of the elbow section, each of the facing bends further serves as a vertical rib, the horizontal rib is provided on the upper part of the elbow section for reinforcement, and, at the same time, the horizontal rib is provided with a trough fixing metal fitting attachment part. Furthermore, there is no disclosure that the elbow section also serves as a vertical rib on an inner side of a female joining structure. Also, any of the troughs has no structure for fixing the trough onto the installation ground.

Also, if a conventional trough is to be fixed stably onto a slope or the like, for example, a hole is to be made directly in a bottom part of the trough so as to tighten and fix a bottom plate with a bolt. However, if the hole is made in the bottom plate of the trough and the bolt or the like is tightened, the bottom part of the trough may crack or deform. Thus, it has been difficult to stably fix the trough onto a slope or the like.

It is common to provide, for reinforcement purpose, outer ribs on outer side surfaces of trough side plates of an exterior of a straight trough. This is to maintain strength while making the most of features, especially thin walls and lightweight, of a resin-made trough. However, when an outer rib protruding outward is provided on a protruding part of a branching trough or on a side plate of a curved part of a bent trough, a rib structure of the protruding outer rib has greater influence than in the case of the straight trough: for example, there are possibilities that the ribs may get damaged during operation, or an operator may stumble on the rib and fall. Also, compared to the case of the straight trough, as to flying objects due to natural disasters such as a typhoon, because the flying objects may hit the rib more likely and collision energy may tend to concentrate on the rib parts, a risk for the ribs to get damaged is higher. In this point, although it has been awaited to develop a branching trough or a bent trough with thin walls and lightweight having a simple structure without ribs protruding outward from an outline that connects curved part of the side plate, having a fixing structure that can be stably fixed to an unstable ground surface, and, at the same time, having an excellent connectivity as a connecting member, such a trough is not yet existent.

A first characteristic of the present invention is to provide a branching trough or a bent trough having a structure in which an elbow section having vertical ribs that are formed being a prescribed distance apart from each other is provided on a side plate of the trough, a horizontal rib is provided at an upper part of the elbow section of the side plate so as to link the vertical ribs of the elbow section, thereby forming a reinforcement structure for the side plates of the trough, and the horizontal rib also serves as a metal fitting attachment part for attaching a metal fitting. Consequently, it is possible to maintain structure strength of the trough without providing vertical ribs on the outer side of the side plate of a curved part of the branching trough or the bent trough, and thus it is unnecessary to provide vertical ribs on the outer side of the curved part of the side plate.

Also, the vertical rib of the elbow section provided in proximity of an opening of the trough is formed so as to serve as an inner rib of a female joining structure, thereby not only improving the structure strength of the side plates of the trough but also simplifying the structure of the branching trough or the bent trough.

In addition to the first characteristic, the present invention has a second characteristic, which is to provide a branching trough or a bent trough etc. with excellent installation performance. The trough includes a hollow columnar protrusion as a bolt fixing rib structure so that the trough can be fixed to the ground with an anchor bolt or the like even if the installation ground is a slope or the like. In such the structure, when fixing the bottom plate with a bolt, the hollow columnar protrusion formed at a back surface of bottom plate of the trough bottom plate receives a tightening load of the bolt, and thus the bottom plate having a thin thickness can be fixed without deformation or cracking. Further, a space can be created on the back surface of the bottom plate, and thus the trough can be fixed to the ground even if the ground has some obstructions or unevenness or the ground is a slope. Furthermore, since the bottom plate can be made thin, the weight can be reduced and cables can be stably held on the troughs including trough connection parts.

In addition to the first and second characteristics, the present invention has a third characteristic. The third characteristic is that connection structures with various troughs and conduits can be obtained by attaching a male-male conversion connection adaptor or an end plate to the female part of the branching trough. Specifically, various connection structures with straight troughs of the same structure, the bent trough, a small-diameter trough, an independent corrugated conduit with a circular cross section, a rectangular conduit with a square cross section, a spirally corrugated conduit with a circular cross section, or the like can be obtained.

Furthermore, by using the connection structures of the third characteristic, it is possible to obtain an invention of a trough line in which a plurality of straight troughs of a prescribed length are connected to the branching trough, or a trough line in which the bent trough or a shielding plate is connected thereto. Also, by fixing the hollow columnar protrusion of the branching trough or the bent trough with an anchor bolt, a fixing structure for such the troughs to the asphalt or concrete ground can be obtained. Finally, it is also possible to obtain an invention of connection methods for obtaining the various connection structures of cable protection members to the branching trough.

### (MEANS FOR SOLVING PROBLEMS)

To achieve the above object, a first aspect of the present invention is a branching trough including side plates forming both side surfaces, and a bottom plate forming a bottom surface, both the side plates standing upright surrounding the bottom plate. A cross section of the branching trough is in a U shape, and the bottom plate, which is in a substantially T shape in a plan view, includes a substantially rectangular main trunk section and a branching section being formed on one long side of the main trunk section extending toward a direction orthogonal to a longitudinal direction of the main trunk section with a diameter gradually decreasing into a substantially arc shape. The side plates are formed of a straight part that is formed on one long side of the main trunk section and a curved part forming outer rims of the branching section extending into the substantially arc shapes with the reduced diameter. A female joining structure of an identical structure is formed at an opening at a tip end of the branching section and at each of openings at both end parts of the longitudinal direction of the main trunk section. The female joining structure is formed in a pair of substantially U shapes facing each other in a plan view, in which each of the U shapes has substantially parallel vertical ribs that are a prescribed distance apart from each other. A horizontal rib, which also serves as a metal fitting attachment part for attaching a metal fitting for installing a lid, is formed at an upper part of an elbow section of each of the side plates such that the horizontal rib links vertical ribs of the elbow section, the vertical ribs being formed a prescribed distance apart from each other, and there are no vertical ribs provided on outer sides of the side plates of the substantially arc-shaped curved part.

Also, in the branching trough of the present invention, the female joining structure formed at each of the openings of each of the end parts of the main trunk section may be a female joining structure that is formed extending inward in a direction orthogonal to the straight part of the side plates of the main trunk section and to each of the side plates of the curved part. Further, the female joining structure that is formed at the opening at the tip end of the branching section may be a female joining structure that is formed extending inward in a direction orthogonal to the curved part. The elbow section formed at each of the main trunk section and the branching section may be formed to serve as an inner vertical rib of the female joining structure provided at each end part of each of the openings of the main trunk section and the branching section.

Here, in the branching trough of the present invention, each female joining structure formed at the both end parts of the longitudinal direction of the main trunk section has the one substantially U-shaped structure provided on the end part of the straight part and the other substantially U-shaped structure formed at the end part of the curved part connecting to the branching section. However, since both of the substantially U-shaped structures are formed within a substantially rectangular region of the main trunk section, the pair of the substantially U-shaped structures formed at the end parts of the straight part and the curved part, respectively, are taken as the female joining structures of the main trunk section. Also, in contrast thereto, the female joining structure formed at the opening of the tip end of the branching section is taken as the female joining structure on the branching section side.

Also, in the branching trough of the present invention, the elbow section is formed by bending each of both sides of each of the side plates, so as to protrude inward, at a prescribed position of the straight part of the main trunk section or the curved part leading to the branching section. At this time, the elbow section refers to a part being bent on one side, not to the whole part protruding inward with the elbow section on each side.

In the branching trough, a bottom plate surface of the female joining structure may be formed a prescribed height below bottom plate surfaces of parts other than the female joining structure, and leg parts of the side plates of the female joining structure protruding to a back surface of the bottom plate for a prescribed height may be formed and the leg parts support the bottom plate the prescribed height above a ground surface, with a space being created on the back surface of the bottom plate. A hollow columnar protrusion protruding downward from the bottom plate with a prescribed height may be formed at a prescribed position in the space created on the back surface of the main trunk section and the branching section. A top surface of the hollow columnar protrusion may be blocked by the bottom plate or the top surface of the hollow columnar protrusion may be opened, and at least the one hollow columnar protrusion may be formed as an anchor bolt fixing part.

A plurality of parallel bottom surface reinforcement ribs may be formed on the back surface of the bottom plate of the substantially T-shaped branching trough. Each of the bottom surface reinforcement ribs has a prescribed length and is formed from a position that is a prescribed distance apart from a center of the longitudinal direction of the straight side plate of the main trunk section toward the opening of the branching section that extends in a direction opposite to the position, so as to link the two.

According to the first aspect of the present invention, as a form of the female joining structure at the opening of the branching trough, the substantially parallel ribs are formed on both sides of the side plate directing inward at the end part of the opening of the side plate and at the position that is the prescribed distance apart from the end part of the opening, respectively, so that the vertical ribs on both sides of the side plate face each other. Since the female joining structure formed at the opening is in a rib structure as above, an effect of reinforcing the end parts of the branching section of the side plate can be obtained.

Also, the elbow section is formed on the side plate, and the elbow section and the horizontal rib disposed at the elbow section can improve bending and compression strength of the side plate. Furthermore, the elbow section also serves as the vertical rib, thereby enhancing the reinforcement effect of the vertical rib formed at the end part of each opening. Also, the vertical rib forming the elbow section, which is formed in proximity of the end part of the main trunk section and the branching section, also serves as an inner vertical rib of the substantially parallel vertical ribs of the female joining structure formed at each opening. Thus, only the outer vertical ribs are to be formed, without forming any other inner vertical ribs, and this can simplify the structure of the branching trough. At the same time, the horizontal rib supports the upper part of the vertical ribs and thus the vertical ribs have an effect of reinforcing the female joining structure.

Moreover, the vertical ribs formed on the inside of the side plate at the both end parts of the curved part and in the proximity of both the end parts thereof and the horizontal rib linking the vertical ribs both have effects of reinforcing the side plates of the curved part. By integrally forming the elbow section of the side plate, the horizontal rib, and the vertical rib with the horizontal rib being in the middle, the reinforcement effects can be built up. Also, in addition to reinforcing the vertical ribs, the horizontal rib can also be used as the attachment part for attaching the metal fitting for fixing the trough lid.

Here, the metal fitting attachment parts are formed between the elbow sections, which are prescribed distance apart and formed in the proximities of the both end parts of the main trunk section side, and the outer ribs formed in the proximities of the elbow sections, respectively. The metal fitting attachment parts are also formed on both sides of the branching section, respectively, linking the elbow sections that are formed with the prescribed distance therebetween, extending into the substantially arc shape with the reduced diameter. At this time, the metal fittings for fixing the trough lids may be attached diagonally at two positions in the main trunk section side and the curved part side, or at total of the four surrounding positions including two positions in the main trunk section side and two positions in the branching section side. Also, the metal fitting attachment part is provided with a bolt attachment hole and thus the trough lid may be fixed with a bolt.

Also, the hollow columnar protrusion of a hollow interior protruding downward from the bottom plate may be provided on the back surface of the bottom plate of the branching trough. The hollow columnar protrusion serves as a bolt fixing structure, and thus the anchor bolt can be fixed for the bolt fixing structure to fix the branching trough to an ordinary gravel-spread surface or ground, as well as to an asphalt or concrete road surface or slope surface, and the branching trough can be installed regardless of the ground of an installation location.

Also, forming the hollow columnar protrusion in the branching trough has an effect of reinforcing the thin plate-like bottom plate. Thus, even if a hole is drilled in the thin plate-like bottom plate, the branching trough is supported by the hollow columnar protrusion and this prevents micro cracks from occurring in the hole-processed part of the bottom plate. Also, the hollow columnar protrusion receives a tightening load of the bolt when fixing the anchor bolt, and thus deformation or micro cracking of the bottom plate can be prevented, compared to the case in which an anchor bolt-fixing hole is provided directly on the bottom plate. Also, since the thin plate-like bottom plate is at the upper part of the hollow columnar protrusion and the hollow columnar protrusion is hollow inside, the hole drilling process to the bottom plate is easy and it is possible to have approximately the same height with a cable accommodating part of another trough that is to be connected to the branching trough.

At this time, the bottom plate surface of the female joining structure formed in the branching trough may be formed a prescribed height below bottom plate surfaces of parts other than the female joining structure. In this way, when stacking and connecting a male joining structure of another trough onto the female joining structure of the branching trough, the level of the upper surface position of the cable accommodation part at the bottom of the branching trough can be aligned with heights of the bottom of the male joining structure and the cable accommodation part of the other connected trough. As a result, a cable is disposed substantially horizontally in the trough, and this can prevent the cable from being disposed diagonally and also can prevent applying extra tension to the cable.

Also, the branching trough may have a structure in which the side plates protrude to the back surface of the bottom plate for the prescribed height to form the leg parts, and the leg parts support the bottom plate the prescribed height above the ground surface. In such the case, a space can be created on the back surface of the bottom plate. For example, normally, if ground adjustment is unnecessary, the bottom plate can be lowered. However, if the ground is uneven, lowering the bottom plate may cause interference with the bottom surface of the branching trough, causing installation problems. However, since the bottom plate is at the prescribed height apart from the ground, when installing the branching trough, influence of the unevenness of the ground can be suppressed and ground leveling or compaction work is unnecessary or reduced, thus improving installation performance. Also, the bottom plate is installed slightly higher than the ground, which makes it easier to install cables when the branching trough is used being connected to other troughs.

Also, by forming bottom-plate reinforcement ribs on the back surface of the bottom plate at the positions the prescribed distance apart from the hollow columnar protrusion, the bottom plate can be reinforced efficiently.

A second aspect of the present invention is a bent trough. The bent trough includes side plates forming both side surfaces and a bottom plate forming a bottom surface, both the side plates standing upright surrounding the bottom plate. A cross section of the bent trough is in a U shape. The bottom plate has a curved part of a prescribed angle in a prescribed direction in a plan view, and both the side plates, forming an inner curved part and an outer curved part, surrounding the curved part of the bottom plate, stand upright and upward from the curved part of the bottom plate so as to form the substantially arc-shaped curved part. At each end part of the side plates, a substantially U-shaped opening is formed. At an end of the opening at each end part of the side plates and in proximity of the end of the opening at each end part, substantially parallel vertical ribs that extend inward in a direction orthogonal to the curved part and are a prescribed distance apart from each other are formed on both sides of the respective side plates to form a female joining structure, having the vertical ribs, in a pair of mutually facing substantially U-shapes facing each other in a plan view. On each of the side plates of the inner curved part and the outer curved part, an elbow section, which also serves as a vertical rib protruding inward, is formed at a prescribed position in proximity of the opening and at a prescribed position in the middle of the curved part, in which the positions are a prescribed distance apart from each other. A horizontal rib, to which a metal fitting attachment part can be attached to install a trough lid, is formed linking the vertical ribs at an upper part of the elbow section, the elbow section serving as the vertical rib and being formed at the prescribed position in the proximity of the opening and at the prescribed position in the middle of the curved part, in which the positions are the prescribed distance apart from each other. The horizontal rib of the outer curved part may be formed longer than the horizontal rib of the inner curved part, and there are no vertical ribs provided on outer sides of the respective side plates forming the inner curved part and the outer curved part.

Also, in the bent trough according to the present invention, similarly to the openings at the both end parts of the side plates, a different female joining structure may be formed at a prescribed position in the middle of the curved part that is a prescribed distance apart from the one end part of the curved part and in proximity of the prescribed position in the middle of the curved part, and the elbow section provided at the prescribed position in the proximity of the opening may serve as the inner vertical rib of the female joining structure in the proximity of the opening, and the elbow section formed at the prescribed position in the middle of the curved part may serve as the inner vertical rib of the different female joining structure. Furthermore, the bent trough may have a groove having a prescribed length in a trough width direction, the groove being formed at a substantially middle of a surface of the bottom plate of the female joining structure in the mutually facing substantially U-shapes in a plan view.

Also, in the present invention, the elbow section is formed, so as to protrude inward, by bending at a prescribed position of each of curves forming the inner curved part and the outer curved part. At this time, the elbow section refers to a part bent on one side, not to the whole part protruding inward with the elbow section on each side.

In the bent trough, at least a bottom plate surface of the female joining structure formed at each end part of the curved part may be formed a prescribed height below bottom plate surfaces of parts other than the female joining structure. Leg parts of the side plates of the female joining structure protruding to a back surface of the bottom plate for a prescribed height may be formed, and the leg parts support the bottom plate the prescribed height above a ground surface, with a space being created on the back surface of the bottom plate. A hollow columnar protrusion protruding downward from the bottom plate with a prescribed height may be formed at a prescribed position in the space created on the back surface by the inner curved part and the outer curved part. A top surface of the hollow columnar protrusion is blocked by the bottom plate or the top surface of the hollow columnar protrusion is opened, and at least the one hollow columnar protrusion is formed as an anchor bolt fixing part. A groove having a prescribed length in a trough width direction may be formed at a substantially middle of a surface of the bottom plate of the female joining structure of the mutually facing substantially U-shapes in a plan view.

The bent trough may include in an interior thereof another bending structure having a smaller bending angle than the bending angle before cutting, in which, with respect to outer vertical ribs of the different female joining structure, in which the vertical ribs with the prescribed height are formed substantially parallel to each other extending inward from the side plates in the direction perpendicular to the bottom plate and the different female joining structure is formed at the prescribed position that is midway between the one end and the other end, which is the prescribed distance apart from the one end, of the curved part formed on both ends of the trough, the bending structure having the smaller bending angle can be obtained by cutting along the vertical ribs as to connect outer side surfaces of the vertical ribs of the inner curved part and the outer curved part, the vertical ribs being formed perpendicular to curves forming the curved part. Thus, the built-in curved trough can be cut out by cutting as necessary.

According to the second aspect of the present invention, similarly to the first aspect of the present invention, as a form of the female joining structure at the opening of the bent trough, the substantially parallel ribs are formed inward at the end part of the opening of the side plate and at the position that is the prescribed distance apart from the end part of the opening, respectively, so that the vertical ribs on both sides of the side plate face each other to form the female joining structure in the pair of substantially U-shapes. Since the female joining structure formed at the opening is in a rib structure as above, an effect of reinforcing the end parts of the side plate can be obtained. Also, since the same female joining structure is formed at each end of the curved part, the trough can be used in cases when the curved part is bent in either a left or right direction. On the other hand, if joining structures at both ends are not the same, i.e., one is a female joining structure and the other is a male joining structure, the joining structures to be connected differ depending on the curving direction, so the trough cannot necessarily be used similarly.

Also, the elbow section is formed on the side plate, and the elbow section and the horizontal rib disposed at the elbow section can improve bending and compression strength of the side plate. Moreover, the vertical ribs formed on the inside of the side plate at the both end parts of the curved part and at the prescribed middle position of the curved part and the horizontal rib connecting the vertical ribs both have effects of reinforcing the side plate of the curved part. By integrally forming the elbow section, the horizontal rib, and the vertical ribs with the horizontal rib being in the middle as above, the reinforcement effects can be built up.

Also, the vertical rib formed at the elbow section serves as the substantially parallel inner vertical rib of the female joining structure that is formed at each opening or at the prescribed middle position of the curved part. Thus, only the substantially parallel vertical ribs of the substantially U-shaped female joining structure provided at the opening or the elbow section are to be formed, which can simplify the structure of the branching trough. Also, the horizontal rib supports the upper part of the vertical ribs, which has an effect of reinforcing the female joining structure. Moreover, it is unnecessary to provide vertical ribs for reinforcement on the outer sides of the two side plates of the inner curved part and the outer curved part, and, in addition to reinforcing the vertical ribs, the horizontal rib can also be used as the attachment part for a metal fitting for fixing the trough lid.

Here, the metal fitting attachment parts are provided at substantially the center of the horizontal ribs provided respectively at the mutually facing elbow sections of the two side plates of the inner curved part and the outer curved part, sharing the centerline as the center of curvature and facing each other, and the metal fittings can be attached thereto. Also, the metal fitting attachment part is provided with a bolt attachment hole and thus the trough lid may be fixed with a bolt.

Also, the hollow columnar protrusion of a hollow interior protruding downward from the bottom plate may be provided on the back surface of the bottom plate of the bent trough. The hollow columnar protrusion functions as a bolt fixing structure, and thus the anchor bolt can be fixed through the hollow columnar protrusion to an ordinary gravel-spread surface or ground, as well as to an asphalt or concrete road surface or slope surface, and the bent trough can be installed regardless of the ground of an installation location.

At this time, the bottom plate surface of the female joining structure formed at the both end parts of the curved part and/or the bottom plate surface of the female joining structure formed at the prescribed middle position of the curved part may be formed the prescribed height below bottom plate surfaces of parts other than the female joining structure.

In this way, in a case of the ordinary bent trough, or even in a case of the cut bent trough with smaller bending angle, when stacking and connecting a male joining structure of another trough onto the female joining structure of the bent trough, the level of the upper surface position of the bottom part of the bent trough can be aligned with heights of the male joining structure or the cable accommodation part of the other connected trough. As a result, a cable is disposed substantially horizontally in the trough, and this can prevent the cable from being disposed diagonally and can also prevent applying extra tension to the cable.

Also, forming the hollow columnar protrusion has an effect of reinforcing the thin plate-like bottom plate. Thus, even if a hole is drilled in the thin plate-like bottom plate, micro cracks do not occur in the hole-processed part of the bottom plate. Also, the hollow columnar protrusion receives a tightening load of the bolt when fixing the anchor bolt, and thus deformation or micro cracking of the bottom plate can be prevented, compared to the case in which an anchor bolt-fixing hole is provided directly on the bottom plate. Also, since the thin plate-like bottom plate is at the upper part of the hollow columnar protrusion and the hollow columnar protrusion is hollow inside, the hole drilling process to the bottom plate is easy and it is possible to have approximately the same height with a cable accommodating part of another trough that is connected to the branching trough. This can prevent applying extra tension to the cable disposed inside the bent trough and the other trough.

Also, the side plates protrude to the back surface of the bottom plate for the prescribed height to form the leg parts and the leg parts support the bottom plate the prescribed height above the ground surface. Thus, a space can be created on the back surface of the bottom plate. For example, normally, if ground adjustment is unnecessary, the bottom plate can be lowered. However, if the ground is uneven, lowering the bottom plate may cause interference with the bottom surface of the bent trough, causing installation problems. However, since the bottom plate of the bent trough is at the prescribed height apart from the ground, when installing the bent trough, influence of the unevenness of the ground can be suppressed and ground leveling or compaction work is unnecessary or reduced, thereby improving installation performance. Also, the bottom plate is installed slightly higher than the ground, which makes it easier to install cables when the bent trough is used to be connected to other troughs.

Also, the male joining structure of another trough, another connection member, the end plate, or the like may be inserted into the female joining structures on the both sides of the side plate to form a connection structure of the bent trough. At this time, a groove is provided in the bottom of the female joining structure and fitting a bottom tip end of the end plate into the groove can fix the end plate more stably and, at the same time, prevent the rotation of the end plate in the width direction. Also, when the half-split end plate is used, similar effects can be obtained by making the structure in which the upper end plate is inserted into the concave part of the lower end plate.

Also, other than at the openings at the both end parts, the mutually parallel ribs are formed at the prescribed middle position of the curved part to form the female joining structure. That is, the entire bent trough includes in the interior thereof the bent trough having the smaller bending angle. Thus, the trough can be used by cutting along the outside of the parallel ribs of the female joining structure at the prescribed middle position of the curved part. That is, cutting at the end of the built-in female joining structure can form the female joining structure at the cut part, and thus the bent trough with the bending angle smaller than the bending angle before cutting can be used. Also, at this time, the vertical ribs at the prescribed middle position of the curved part can be used as a mark for the cutting position for cutting. Here, it is also preferable, as mentioned above, that the bottom plate of the female joining structure formed at the prescribed middle position of the curved part of the bent trough with smaller bending angle is formed below the cable accommodation part.

A third aspect of the present invention is a branching trough connection structure . The connection structure includes the substantially T-shaped branching trough according to the first aspect of the present invention and a straight trough having a prescribed length and a main body with a substantially uniform cross-sectional diameter. In the connection structure, a male joining structure of the straight trough is connected to the female joining structure of at least one of the openings of the substantially T-shaped branching trough.

The third aspect of the present invention may also be a branching trough connection structure , the connection structure including the substantially T-shaped branching trough according to the first aspect of the present invention and a straight trough having a prescribed length and a main body with a substantially uniform cross-sectional diameter. In the connection structure, a female joining structure of the straight trough may be connected to the female joining structure of the substantially T-shaped branching trough of at least one of the openings via a male-male conversion connection adaptor.

The third aspect of the present invention may also be a branching trough connection structure, the connection structure including the substantially T-shaped branching trough according to the first aspect of the present invention and the bent trough according to the second aspect of the present invention. In the connection structure, the female joining structure formed at the opening of one of the end parts of the bent trough may be connected to the female joining structure of at least one of the openings of the substantially T-shaped branching trough via the male-male conversion connection adaptor.

The third aspect of the present invention may also be a branching trough connection structure, the connection structure including the substantially T-shaped branching trough according to the first aspect of the present invention and a small-diameter trough. In the connection structure, a square-shaped end plate may be inserted into the female joining structure of at least one of the openings of the substantially T-shaped branching trough, the end plate having a width wider than a distance between the facing vertical ribs of the female joining structure may be in a substantially U shape with an opening of a prescribed size being formed at a lower or upper part thereof. A male joining structure of the small-diameter trough may be disposed at the opening of the end plate so as to be fitted and connected to the opening of the end plate with a flange part of the male joining structure of the small-diameter trough as a stopper structure, thereby fixing the male joining structure of the small-diameter trough to the end plate.

The third aspect of the present invention may also be a branching trough connection structure, the connection structure including the substantially T-shaped branching trough according to the first aspect of the present invention and a conduit. In the connection structure, the conduit to be connected to the substantially T-shaped branching trough may have an independent corrugated structure having a small-diameter part with a circular cross section, and may be either an independent corrugated conduit having a small-diameter part with a circular cross section or a rectangular conduit in which a large-diameter part with a rectangular cross section and a small-diameter part with a circular cross section are alternately formed. An end plate in a half-split structure, which can be vertically split into halves, may be disposed at the female joining structure of any one of the openings of the substantially T-shaped branching trough, and the end plate has an opening at parts that face each other when being split. The small-diameter part of the conduit may be inserted into and held by the opening of the end plate such that the conduit is fixed to the end plate. At this time, if pulling-out force is applied to the connected conduit, the large-diameter part is to be butted against the end plate such that the conduit never comes off.

The third aspect of the present invention may also be a branching trough connection structure, the connection structure including the substantially T-shaped branching trough according to the first aspect of the present invention and a conduit. The conduit to be connected to the substantially T-shaped branching trough is in a spirally corrugated structure with a circular cross section. In the connection structure, an inner connection member and an outer connection member are used. The inner connection member includes a cylindrical part having a circular cross section and spiral grooves that can fit with an inner peripheral surface of the conduit, and a flange part formed at an end of the cylindrical part. The outer connection member includes a cylindrical part having a circular cross section and spiral grooves that can fit with an outer peripheral surface of the conduit, and a flange part formed at an end of the cylindrical part. The cylindrical part of the inner connection member and the cylindrical part of the outer connection member are screwed together with the inner peripheral surface and the outer peripheral surface of the conduit, respectively, so that the inner connection member and the outer connection member are attached to the end of the conduit. The outer connection member is disposed further back from the end of the conduit than the inner connection member, an end plate having an aperture into which the conduit can be inserted through is disposed at the female joining structure at the opening, and the end plate is held between the flange part of the inner connection member and the flange part of the outer connection member, thereby fixing the conduit.

In the third aspect of the present invention, a groove having a prescribed length in a width direction of the trough may be formed at a substantially middle of a surface of the bottom plate, which is the bottom part of the female joining structure in the substantially U-shapes that are facing each other, and a protrusion that can be fitted into the groove may be provided at a tip end of a bottom part of the end plate.

According to the third aspect of the present invention, the male joining structure of a trough is inserted down into the substantially parallel space created by the ribs of the female joining structure of the branching trough so that the straight trough can be directly connected to the opening of the branching trough.

Also, by using the male-male conversion connection adaptor, the female joining structure of the branching trough can face the female joining structure of the other straight trough or the bent trough to be connected.

Also, by using the substantially U-shaped end plate, having a square shape as a whole with the opening of the prescribed size formed below or above the center part, the small-diameter straight trough can be connected to the branching trough.

Also, by using the end plate that has the opening of the prescribed size and can be split vertically, either the independent corrugated conduit with circular cross sections and the rectangular conduit with rectangular large-diameter parts and small-diameter parts can also be connected to the branching trough.

Also, by attaching the inner connection member having the flange part and the outer connection member having the flange part to the end part of the spirally corrugated conduit and placing the end plate fixed to the opening of the branching trough between both the flange parts, the branching trough and the spirally corrugated conduit can be connected.

A fourth aspect of the present invention is a trough line using the connection structures for the branching trough according to the third aspect of the present invention, in which a trough line of a plurality of interconnected straight troughs each having a prescribed length is connected to another opening of the substantially T-shaped branching trough, the female joining structure at the other opening is connected to either a male joining structure that is disposed at one end of the interconnection structure of the plurality of interconnected straight troughs or a female joining structure that is disposed at the other end of the interconnection structure of the plurality of interconnected straight troughs via the male-male conversion connection adaptor, a cable is disposed inside the branching trough so as to have either a branching structure or a bending structure, and trough lids are put over the trough line.

In the trough line, the bent trough having the female joining structure on each end part may be disposed via the male-male conversion connection adaptor in at least a part of the trough line of either the interconnection structure of the straight troughs in which the male joining structure is disposed at the one end or the interconnection structure of the straight troughs in which the female joining structure is disposed at the other end, the cable may be disposed inside the branching trough so as to have either the branching structure or the bending structure, and the trough lids may be put over the trough line.

In the trough line, the cable disposed inside the troughs forming the trough line may have only the bending structure in the branching trough, the cable may be disposed on one side of the mutually facing openings, a shielding plate may be disposed on the other side, and the cable may go through the remaining opening of the branching section.

In the trough line, the cable disposed inside the troughs forming the trough line may have only the bending structure in the branching trough, the cable may be disposed on one side of the mutually facing openings of the branching trough and on the opening of the branching section, and the shielding plate may be disposed on the other side of the mutually facing openings of the branching trough.

According to the fourth aspect of the present invention, trough lines in which the branching trough is connected to other troughs, such as the straight trough, the bent trough, and the small-diameter trough, and various types of conduits can be obtained. At this time, the trough line may be a trough line including a cable-branching structure or, by providing the shielding plate, may be a trough line including only the bending structure without the cable-branching structure.

A fifth aspect of the present invention is a fixing structure for the substantially T-shaped branching trough according to the first aspect of the present invention. In the fixing structure, the hollow columnar protrusion protruding downward from the back surface of the bottom plate with the prescribed height is formed as a fixing part for an anchor bolt at a prescribed position in proximity of a substantially center of a border between the main trunk section and the branching section, and the hollow columnar protrusion has a hollow cylindrical structure, and, by inserting and tightening the anchor bolt into the hollow part of the hollow cylindrical structure, the substantially T-shaped branching trough is fixed to the asphalt or concrete ground surface.

According to the fifth aspect of the present invention, the branching trough can be fixed to the ground, including even a slope, with certainty by using the hollow columnar protrusion and fixing with the anchor bolt to the ground. At this time, the hollow columnar protrusion can reinforce the thin plate-like bottom plate, thereby preventing cracking or the like of the bottom plate.

A sixth aspect of the present invention is a fixing structure for the bent trough according to the second aspect of the present invention. In the fixing structure, the hollow columnar protrusion protruding downward from the back surface of the bottom plate with the prescribed height is formed as the fixing part for the anchor bolt, the hollow columnar protrusion has a hollow cylindrical structure, and, by inserting and tightening the anchor bolt into the hollow part of the hollow cylindrical structure, the bent trough is fixed to the asphalt or concrete ground surface.

According to the sixth aspect of the present invention, similarly to the fixing structure for the branching trough, the bent trough can be fixed to the ground, including even a slope, with certainty by using the hollow columnar protrusion and fixing with the anchor bolt to the ground. At this time, the hollow columnar protrusion can reinforce the thin plate-like bottom plate, thereby preventing cracking or the like of the bottom plate.

A seventh aspect of the present invention is a method for connecting a cable protection member to the branching trough according to the first aspect of the present invention. In the female joining structure formed of the substantially parallel vertical ribs that have the prescribed height and are formed, extending inwardly from the side plate in a perpendicular direction and facing each other, at the end part of at least one of the three openings of the branching trough and at a position in proximity of the end part of the opening that is a prescribed distance apart from the end part of the opening, to a space between both the substantially parallel end faces formed by the vertical ribs, either the flange part of the male joining structure of the trough is directly fixed, the female joining structure of the trough is fixed via the male-male conversion connection adaptor, the flange part of the male joining structure of the small-diameter trough is fixed via the end plate, the small-diameter part of the independent corrugated conduit having the circular or rectangular cross section is fixed by being placed between the end plates, or the end part of the spirally corrugated conduit is fixed by screwing the inner connection member and the outer connection member via the end plate and sandwiching the end plate between the flange part of the inner connection member and the flange part of the outer connection member.

According to the seventh aspect of the present invention, various cable protection members can be connected via the end plate to the female joining structure of the branching trough. Here, the seventh aspect of the present invention can be applied to troughs in other structures as long as the female joining structure is similar to the seventh aspect of the present invention, and thus, although not particularly specified in the present application, the method for connecting a cable protection member to the bent trough or the straight trough can be obtained.

### (EFFECTS OF THE INVENTION)

In the present invention, an elbow section is provided by working on the shapes of the trough side plates. This can improve the structure strength of the trough without providing vertical ribs on the outer sides of the trough side plates, and, at the same time, this can make the vertical rib of the elbow section of the side plate serve as a reinforcement structure for the female joining structure and the horizontal rib part connected to the elbow section as well as a trough lid fixing structure. Thus, the lightweight and thin-walled branching trough and bent trough can be obtained.

Also, one aspect of the present invention can provide the branching trough and bent trough, etc. that can be easily fixed to the ground with anchor bolts even if the installation ground has unevenness or is a slope, for example, and in which cables can be easily laid. Furthermore, by fixing the hollow columnar protrusion of the branching trough or the bent trough with the anchor bolt, fixing structures in which such the troughs are fixed to asphalt or concrete ground can be obtained.

Also, by attaching the male-male conversion connection adaptor or the end plate to the female joining structure of the branching trough, various connection structures between the branching trough and the other troughs or conduits and connection methods to realize such the connection structures, can be obtained. Furthermore, by using the connection structures, the trough lines etc., in which the plurality of straight troughs each having a prescribed length are interconnected with each other, can be provided.

### BRIEF DESCRIPTION OF DRAWINGS

FIG. 1 is an upper perspective view showing a branching trough 1 and a trough lid 3.
FIG. 2 is a lower perspective view of the branching trough 1.
FIG. 3A is a plan view of the branching trough 1.
FIG. 3B is a bottom view of the branching trough 1.
FIG. 4A is an enlarged view of a hollow columnar protrusion 27, showing a state before hole drilling.
FIG. 4B is an enlarged view of the hollow columnar protrusion 27, showing a state after drilling a guide hole into a bottom plate.
FIG. 4C is an enlarged view of the hollow columnar protrusion 27, showing a state after drilling a through hole to the hollow columnar protrusion.
FIG. 5 is a view showing a branching trough fixing structure 40.
FIG. 6A is another bottom view of the branching trough 1.
FIG. 6B is another bottom view of the branching trough 1.
FIG.7 is an upper perspective view showing a bent trough 41 and a trough lid 43.
FIG. 8 is a lower perspective view of the bent trough 41.
FIG. 9A is a plan view of the bent trough 41.
FIG. 9B is a bottom view of the bent trough 41.
FIG. 10 is another lower perspective view of the bent trough 41.
FIG. 11A is an enlarged view of a hollow columnar protrusion 67, showing a state before hole drilling.
FIG. 11B is an enlarged view of the hollow columnar protrusion 67, showing a state after drilling a guide hole into a bottom plate.
FIG. 11C is an enlarged view of the hollow columnar protrusion 67, showing a state after drilling a through hole to the hollow columnar protrusion.
FIG. 12 is a view showing a bent trough fixing structure 40a.
FIG. 13A is a plan view of the bent trough 41 before cutting.
FIG. 13B is a plan view of the bent trough 41 after cutting.
FIG. 14 is a view showing an angle of the bent trough 41.
FIG. 15A is a view showing a state before connecting the branching trough 1 and a straight trough 81 in a trough connection structure 90.
FIG. 15B is a view showing the trough connection structure 90 in which the branching trough 1 and the straight trough 81 are connected.
FIG. 16 is an enlarged view of the trough connection structure 90.
FIG. 17A is a view showing a state before connecting the branching trough 1 and the straight trough 81 in a trough connection structure 90a.
FIG. 17B is a view showing a step of constructing the trough connection structure 90a in which the branching trough 1 and the straight trough 81 are connected.
FIG. 18A is an enlarged view showing a state before connecting the branching trough 1 and the straight trough 81 in the trough connection structure 90a.
FIG. 18B is an enlarged view showing the trough connection structure 90a in which the branching trough 1 and the straight trough 81 are connected.
FIG. 19A is a view showing a state before connecting the branching trough 1 and a bent trough 41 in a trough connection structure 90b.
FIG. 19B is a view showing the trough connection structure 90b in which the branching trough 1 and the bent trough 41 are connected.
FIG. 20A is a view showing a state before connecting the branching trough 1 and a small-diameter trough 87 in a trough connection structure 90c.
FIG. 20B is a view showing the trough connection structure 90c in which the branching trough 1 and the small-diameter trough 87 are connected
FIG. 21A is a front view showing an end plate 93.
FIG. 21B is a plan view showing a male joining structure 83a of the small-diameter trough 87.
FIG. 22A is a view showing a state before connecting the branching trough 1 and a rectangular conduit 101 in a trough connection structure 90d.
FIG. 22B is a view showing the trough connection structure 90d in which the branching trough 1 and the rectangular conduit 101 are connected.
FIG. 23A is an enlarged view of an end plate 93a before connecting the branching trough 1 and the rectangular conduit 101 in the trough connection structure 90d.
FIG. 23B is an enlarged view of the end plate 93a in the trough connection structure 90d in which the branching trough 1 and the rectangular conduit 101 are connected.
FIG. 24A is a view showing a trough connection structure 90e in which the branching trough 1 and an independent corrugated conduit 101a are interconnected.
FIG. 24B is an enlarged view of the end plate 93a of the trough connection structure 90e in which the branching trough 1 and the independent corrugated conduit 101a are connected.
FIG. 25A is a view showing a state before fixing an inner connection member 97a and an outer connection member 97b are fixed to a spirally corrugated conduit 101b.
FIG. 25B is a view showing a state in which only the outer connection member 97b is connected to the spirally corrugated conduit 101b.
FIG. 25C is a view showing a state in which both the inner connection member 97a and the outer connection member 97b are connected to the spirally corrugated conduit 101b.
FIG. 26 is a view showing a trough connection structure 90f in which the branching trough 1 and the spirally corrugated conduit 101b are connected.
FIG. 27 is a view showing an end plate 93b.
FIG. 28A is a view showing a trough line 100 without trough lids.
FIG. 28B is a view showing the trough line 100 with trough lids being put on.
FIG. 29A is a view showing a trough line 100a without trough lids.
FIG. 29B is a view showing the trough line 100a with trough lids being put on.
FIG. 30A is a view showing a trough line 100b.
FIG. 30B is a view showing a trough line 100c.
FIG. 31 is an enlarged view showing a shielding plate 113.

### DETAILED DESCRIPTION

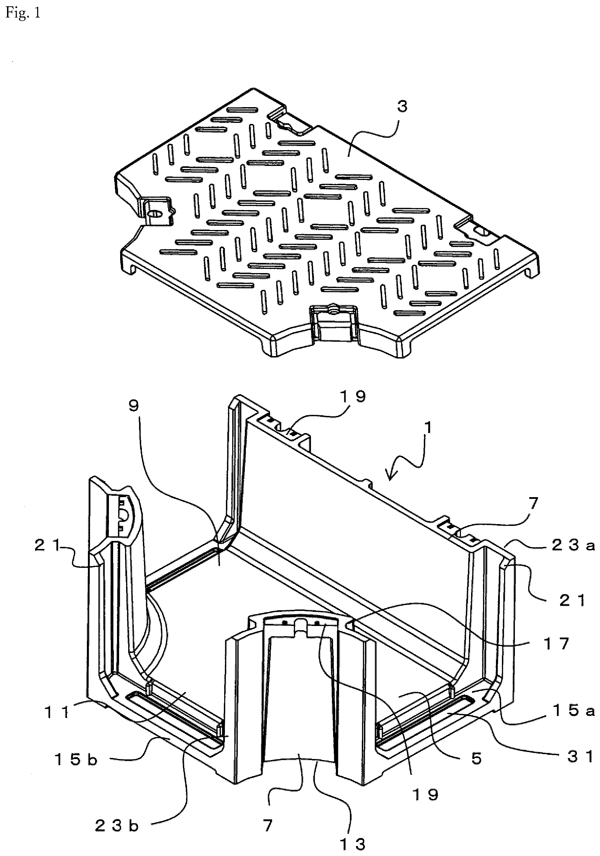

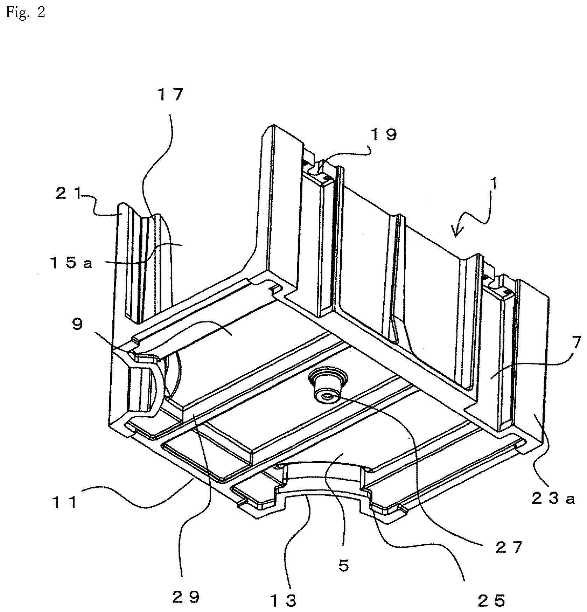

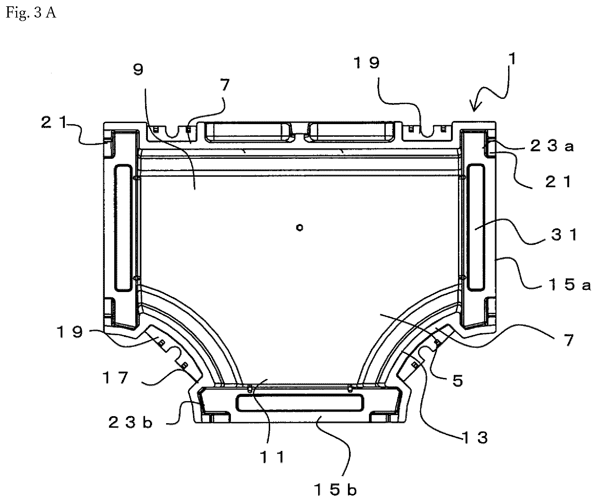

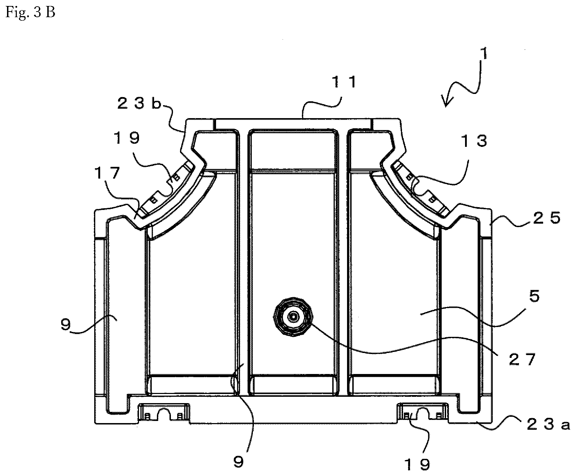

Hereinafter, some embodiments of the present invention will be described with reference to the accompanying drawings. FIG. 1 is an upper perspective view showing a branching trough 1 and a trough lid 3, FIG. 2 is a lower perspective view of the branching trough 1, FIG. 3A is a plan view of the branching trough 1, and FIG. 3B is a bottom view of the branching trough 1. The branching trough 1 mainly includes side plates 7 forming both side surfaces, and a bottom plate 5 forming a bottom surface, in which both the side plates 7 stand as to surround the bottom plate 5. The branching trough 1 is a trough having a substantially U-shaped cross section and a substantially T-shaped plan view.

The branching trough 1 and the trough lid 3 are made of resin, for example, and are molded by press molding or injection molding. The branching trough 1 is used with the trough lid 3 being placed over the branching trough 1. In the descriptions hereafter, illustrations of the trough lid 3 will be omitted unless otherwise shown.

As shown in FIG. 3A and the like, the bottom plate 5 is a plate member in which a substantially rectangular main trunk section 9 and a branching section 11 are continuously and integrally formed. The branching section 11, extending in a direction orthogonal to a longitudinal direction of the main trunk section 9, is formed on a side of another long side that is opposite to the long side of the main trunk section 9. That is, the bottom plate 5 is in a substantially T shape in a plan view, and the branching trough 1 includes the main trunk section 9 and the branching section 11. The branching section 11 is formed on one side of the long side of the main trunk section 9, extending from the other long side of the main trunk section 9 toward the direction orthogonal to the longitudinal direction of the main trunk section 9 with a diameter gradually decreasing into a substantially arc shape.

The side plates 7 are formed along an outer shape of the bottom plate 5. That is, the side plates 7 are formed of a straight part that is formed on the one long side of the main trunk section 9 and curved parts 13 each of which forms an outer rim of the branching section 11 extending into the substantially arc shape with the reduced diameter.

The substantially T-shaped branching trough 1 opens in three directions. That is, a couple of openings 15a each having a prescribed width are formed symmetrically to each other on both end parts of the longitudinal direction of the main trunk section 9, respectively. In addition, an opening 15b, which is different from the two openings 15a of the main trunk section 9, is formed at a tip end of the branching section 11 so as to be substantially orthogonal to the two openings 15a of the main trunk section 9.

At each of the openings 15a on both end parts of the longitudinal direction of the main trunk section 9, a female joining structure 23a for connecting a cable protection member, which will be described below, is formed. The female joining structure 23a includes parallel vertical ribs 21 that are prescribed distance apart from each other. Similarly, at the opening 15b at the tip end of the branching section 11, a female joining structure 23b for connecting a cable protection member, which will be described below, is formed. The female joining structure 23b includes the parallel vertical ribs 21 that are prescribed distance apart from each other. That is, the female joining structure 23b at an end part of the branching section 11 has a similar structure to the female joining structure 23a, which has the parallel vertical ribs 21 and is at each of the openings 15a formed at each end part of the longitudinal direction of the main trunk section 9.

In more detail, the female joining structures 23a of the pair of substantially U-shapes facing each other in a plan view and having the substantially parallel vertical ribs 21 that are prescribed distance apart from each other and extend inward in a direction orthogonal to the side plate 7 of the straight part of the main trunk section 9 and the side plate 7 of the curved part 13, are formed at the openings 15a on the both end parts of the longitudinal direction of the main trunk section 9 and in proximities of the openings 15a, respectively. Also, the substantially parallel vertical ribs 21 that are prescribed distance apart from each other and extend inward in a direction perpendicular to the curved part are provided at the opening 15b at the tip end of the branching section 11 and in proximity of the opening 15b to form the female joining structures 23b of the pair of substantially U-shapes, which are different from the female joining structure 23a formed at the opening 15a of the main trunk section 9 in the substantially U shape in the plan view with the vertical ribs 21 facing each other.

That is, in the female joining structures 23a, the substantially parallel vertical ribs 21 having a prescribed height are provided at the end part of each of the openings 15a and at a position close to the end part of the opening 15a, being a prescribed distance apart from the end part of the opening 15a. Each of the vertical ribs 21 is formed extending inward from each of the facing side plates 7 in the direction orthogonal to the side plate 7 so as to face each other, thereby forming the substantially U shapes facing each other in the plan view. Similarly, in the female joining structures 23b, the substantially parallel vertical ribs 21 having a prescribed height are provided at the end part of the opening 15b and at a position close to the end part of the opening 15b, being a prescribed distance apart from the end part of the opening 15b. Each of the vertical ribs 21 is formed extending inward from each of the facing side plates 7 in the direction orthogonal to the side plate 7 so as to face each other, thereby forming a pair of the substantially U shapes facing each other in the plan view. As above, the female joining structure 23b at the tip end of the branching section 11 has a similar structure to the female joining structure 23a formed at each end part of the longitudinal direction of the main trunk section 9.

Bottom plate surfaces of the female joining structures 23a and 23b are formed a prescribed height below bottom plate surfaces of parts other than the female joining structures 23a and 23b. This enables to match levels of upper surface positions of bottom parts of another trough and the branching trough 1 when stacking and connecting a male joining structure of the other trough onto the female joining structures 23a and 23b. At a substantially middle of a surface of the bottom plate 5 that corresponds to the bottom parts of the female joining structures 23a and 23b of the mutually facing substantially U-shapes, a groove 31 having a prescribed length is formed in a width direction of the trough. A function of the groove 31 will be described below.

At each of end part proximities of the side plates 7 of the straight part of the main trunk section 9 and the curved part 13 of the branching section 11 (i.e. the parts of which the diameter decreases from the main trunk section 9 toward the branching section 11), an elbow section 17 protruding inward is formed. The elbow sections 17 are prescribed distance apart from each other. The elbow section 17 is provided so as to link an inner side of the opening 15a at the one end part of the main trunk section 9, or an inner side of the opening 15a at the other end part of the main trunk section 9, with an inner side of the opening 15b at the end part of the branching section 11. That is, the elbow section 17 formed on the main trunk section 9 is formed so as to link the both end part proximities of the long side of the main trunk section 9, and the elbow section 17 formed on the curved part is formed so as to link the both end part proximities of the curved part.

Horizontal ribs 19 being prescribed distance apart from each other and linking both ends of each of the elbow sections 17 are formed at upper parts of the straight part and the elbow sections 17 of the curved part, which are upper parts of the side plates 7. The horizontal ribs 19 are formed in a substantially horizontal direction so as to be orthogonal to the vertical ribs that are provided in a substantially vertical direction. The horizontal ribs 19 also serve as metal fitting attachment parts for attaching metal fittings for installing trough lids. That is, when the trough lid 3 is put over the branching trough 1, the trough lid 3 can be fixed to the horizontal rib 19 of the branching trough 1 by using the metal fittings, of which illustrations are omitted.

All the end parts of the elbow sections 17, which are provided linking the inner side of the opening 15a at the one end part of the main trunk section 9, or the inner side of the opening 15a at the other end part of the main trunk section 9, with the inner side of the opening 15b at the end part of the branching section 11, also serve as the inner vertical ribs 21 of the female joining structures 23a and 23b that are provided at the end parts of the openings 15a and 15b of the main trunk section 9 and the branching section 11, respectively. That is, the structure has no reinforcement vertical ribs formed on the outer side of the side plate 7 of the substantially arch-shaped curved part 13.

Also, as shown in FIG. 2 and FIG. 3B, at each of the female joining structures 23a and 23b, the side plates 7 protrude to a back surface of the bottom plate 5 for a prescribed height to form leg parts 25. That is, on a bottom surface side of the branching trough 1, the leg parts 25 protrude downward such that most parts of the bottom surface of the bottom plate 5 other than the leg parts 25 are positioned above the leg parts 25. Thus, when the branching trough 1 is installed on a ground, the leg parts 25 support the bottom plate 5 at the prescribed height above the ground surface, with a space being created on the back surface of the bottom plate 5.

On the back surface of the main trunk section 9 and the branching section 11, a hollow columnar protrusion 27 protruding downward from the bottom plate 5 with a prescribed height is formed at a prescribed position in the above-mentioned space. Also, on the back surface of the bottom plate 5 of the branching trough 1 having the substantially T shape, bottom surface reinforcement ribs 29 protruding downward are provided at parts different from the position of the hollow columnar protrusion 27. The plurality of mutually parallel bottom surface reinforcement ribs 29 having a prescribed length are formed from positions a prescribed distance apart from a center of the longitudinal direction of the straight-shaped side plate 7 of the main trunk section 9 to the opening 15b of the branching section 11 extending in the opposite direction so as to link the two positions.

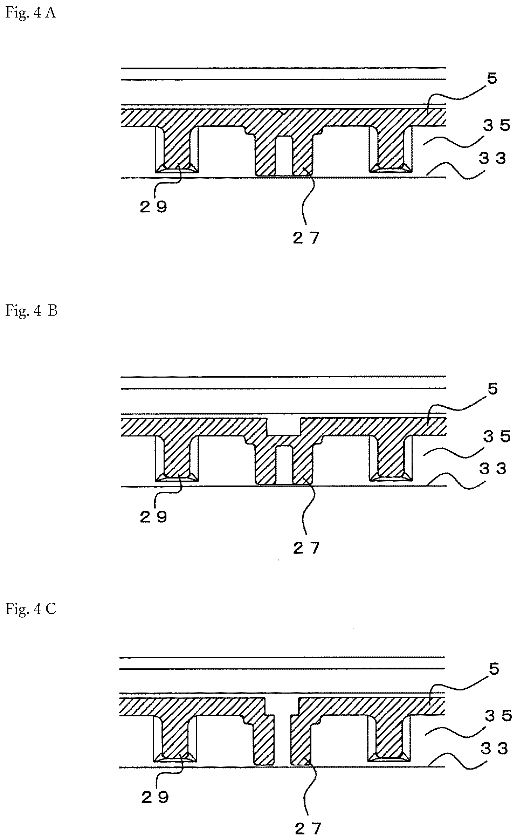

FIG. 4A is an enlarged cross-sectional view of proximity of the hollow columnar protrusion 27. As shown in the drawing, the hollow columnar protrusion 27 is substantially circular (a cylindrical shape) and hollow at a lower part. That is, the bottom plate 5 blocks an upper part of the hollow columnar protrusion 27. Also, on an upper surface of the bottom plate 5 on the upper part of the hollow columnar protrusion 27, a minute concave part is formed. Preferably, the hollow columnar protrusion 27 has an outer diameter of approximately 33 mm, an inner diameter (a hole part) of 10 mm, a height (the protruded height from the bottom surface of the bottom plate 5) of at least 8 mm or more and 30 mm or less, for example.

To utilize the hollow columnar protrusion 27, firstly, as shown in FIG. 4B, a guide hole having a prescribed size is provided, with the above-mentioned minute concave part as a mark, in the bottom plate 5 at the upper part of the hollow columnar protrusion 27. At this time, the guide hole to be provided in the bottom plate 5 is larger than an inner diameter of a hollow of the hollow columnar protrusion 27. Next, as shown in FIG. 4C, a hole having approximately the same diameter as the hollow part of the hollow columnar protrusion 27 is provided from the upper or lower part such that a through hole interconnects an upper surface side of the bottom plate 5 and the lower part of the hollow columnar protrusion 27. As above, a two-level hole may be provided by providing at the lower part of the guide hole that is smaller than the guide hole and has approximately the same diameter as the hollow part of the hollow columnar protrusion 27, or, alternatively, a one-level through hole having approximately the same diameter as the hollow part of the hollow columnar protrusion 27 may be provided without providing the guide hole.

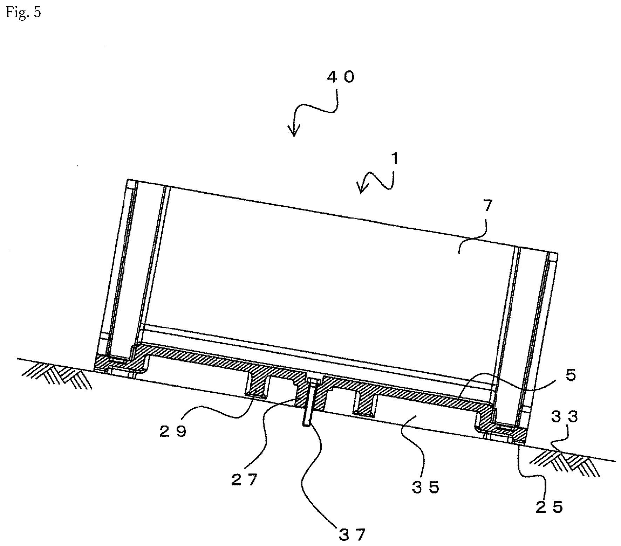

FIG. 5 is a view showing a branching trough fixing structure 40 in which the substantially T-shaped branching trough 1 is fixed to a ground surface 33 after the above process. The hollow columnar protrusion 27 protruding downward from the back surface of the bottom plate 5 with the prescribed height is formed, as a fixing part for an anchor bolt 37, at a prescribed position of the main trunk section 9 that is a prescribed distance apart from a border between the main trunk section 9 and the branching section 11. The hollow columnar protrusion 27 has a hollow cylindrical structure, and, by inserting and screwing the anchor bolt 37 into the hollow part of the hollow cylindrical structure, the substantially T-shaped branching trough 1 is fixed to the asphalt or concrete ground surface 33.

At this time, as mentioned above, the leg parts 25 protruding downward are formed at the end parts of the branching trough 1, and thus, when the branching trough 1 is fixed to the ground surface 33, a space 35 can be created between the bottom plate 5 and the ground surface 33.

Note that, as shown in FIG. 4A, when there is no process done for the anchor bolt fixing hole and fixing with the anchor bolt 37 is not performed, a top surface part of the hollow columnar protrusion 27 is blocked by the bottom plate 5. This can prevent entry of foreign substances into the branching trough 1 from the lower part. On the other hand, if the fixing with the anchor bolt 37 is to be performed, the top surface of the hollow columnar protrusion 27 may be opened in advance. That is, the top surface of the hollow columnar protrusion 27 may be blocked by the bottom plate 5 or may be opened.

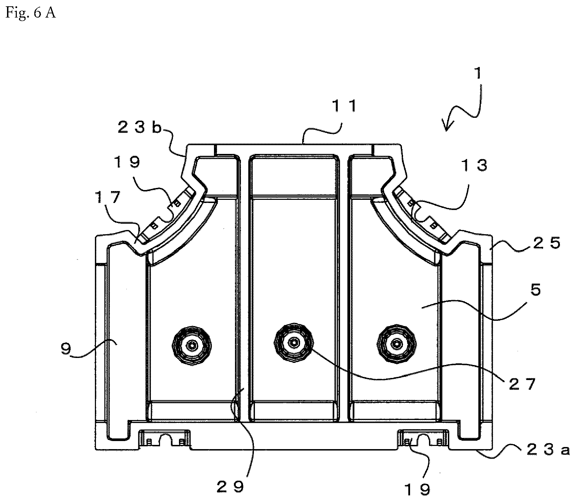

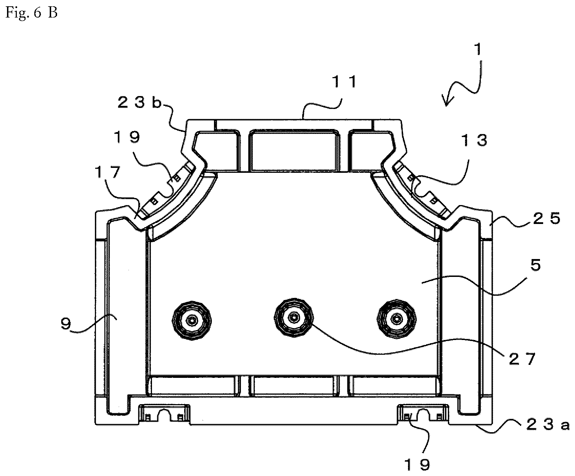

Other than the substantially cylindrical shape as shown in the drawings, the hollow columnar protrusion 27 may also be in other shapes, such as a substantially square column shape or a substantially polygon shape, in which the anchor bolt fixing hole can be formed. Also, as shown in FIG. 6A and 6B, the hollow columnar protrusion 27 may be disposed at a plurality of locations. That is, at least the one hollow columnar protrusion 27 is to be provided to form the anchor bolt fixing part.

FIG. 6A shows a case in which the three hollow columnar protrusions 27 are provided at prescribed positions of the main trunk section 9 at substantially equal intervals, with the bottom surface reinforcement ribs 29 provided between the hollow columnar protrusions 27, linking the long side of the main trunk section 9 with the opposing opening side of the branching section 11. FIG. 6B shows an example in which the three hollow columnar protrusions 27 are provided linearly at prescribed positions of the main trunk section 9 at substantially equal intervals. FIG. 3B shows a case in which the hollow columnar protrusions 27 is disposed at a substantially center between the two bottom surface reinforcement ribs 29 provided as in the case of FIG. 6A. As above, combining both the hollow columnar protrusions 27 and the bottom surface reinforcement ribs 29 accordingly for reinforcing the bottom plate can reinforce the bottom plate and, at the same time, can make it easier to obtain the prescribed space on the back surface of the bottom plate 5 of the trough.

Also, as it can be seen by comparing FIG. 6A with FIG. 6B, providing the plurality of the hollow columnar protrusions 27 can normally provide both effects of the anchor bolt fixing hole and bottom surface reinforcement. Also, although the bottom surface reinforcement ribs 29 may be provided in addition to the hollow columnar protrusions 27, providing the plurality of the hollow columnar protrusions 27 at prescribed intervals can increase the number of options for the fixing positions of the anchor bolts and, at the same time, the branching trough 1 can be fixed firmly by fixing the bolts at the plurality of positions. Also, it is possible to have more spaces without obstacles on the back surface of the trough than in the case of providing the bottom surface reinforcement ribs 29 in addition, and thus it is more preferable to provide the plurality of the hollow columnar protrusions 27. At this time, as shown in the drawings, at the end parts of the side plate 7, short ribs of a bent structure may be provided, or may not be provided, only in the proximities of the end parts of the side plate 7. The hollow columnar protrusion 27 occupies less length and area than the bottom surface reinforcement ribs and thus excels in workability, increases the number of options for the anchor bolt fixing positions, and can firmly fix the branching trough 1 by fixing the bolts at the plurality of positions.

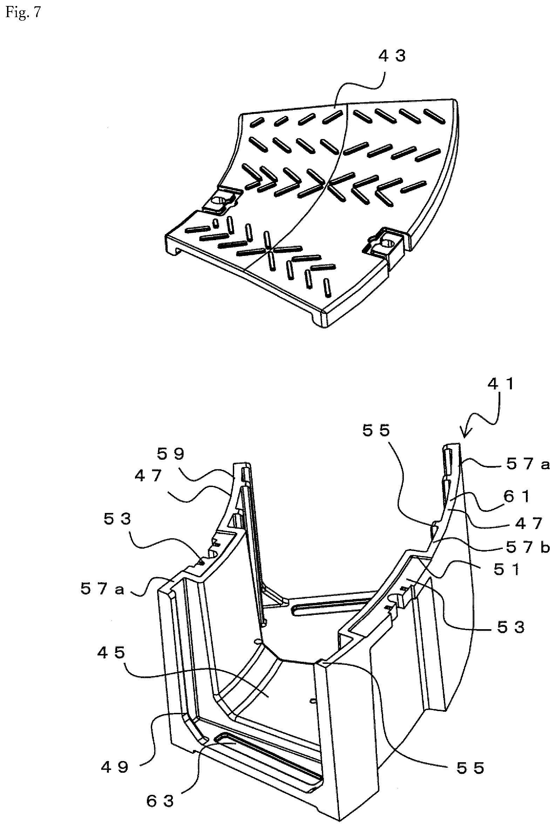

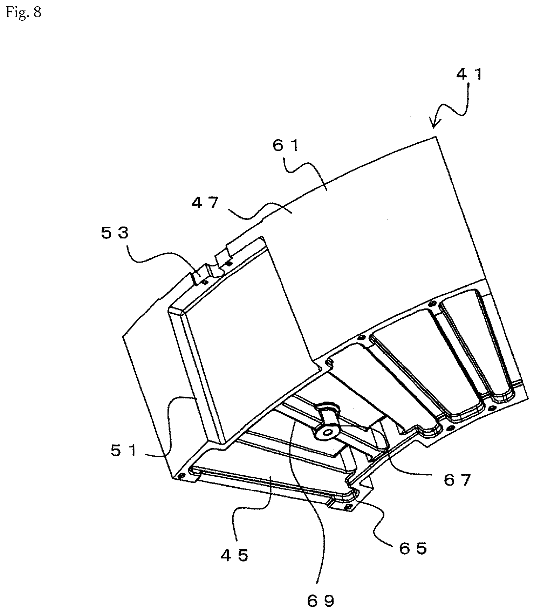

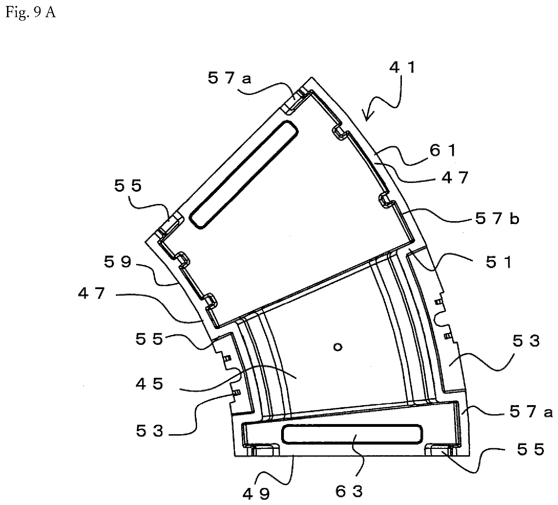

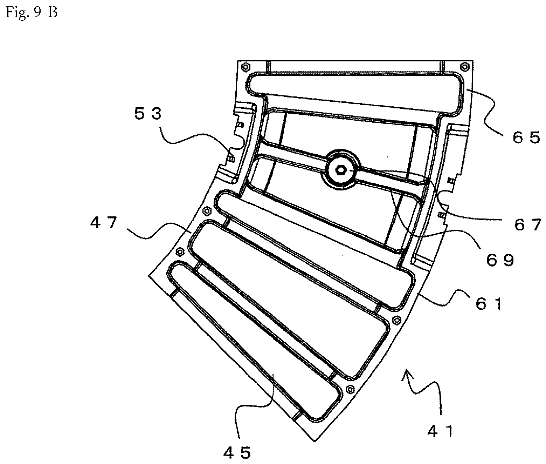

Next, a bent trough will be described. FIG. 7 is an upper perspective view showing a bent trough 41 and a trough lid 43, FIG. 8 is a lower perspective view of the bent trough 41, FIG. 9A is a plan view of the bent trough 41, and FIG. 9B is a bottom view of the bent trough 41. The bent trough 41 mainly includes side plates 47 forming both side surfaces and a bottom plate 45 forming a bottom surface, in which both the side plates 47 stand so as to surround a curved part of the bottom plate 45, and a cross section of the bent trough 41 is in a substantially U shape. Similarly to the branching trough 1 etc., the bent trough 41 and the trough lid 43 are made of resin, for example, and are molded by press molding or injection molding.

As shown in FIG. 9A and so on, the bottom plate 45 has the curved part of a prescribed angle in a prescribed direction in a plan view. The curved part includes an inner curved part 59 forming an inner side of a curve, and an outer curved part 61 forming an outer side of the curve. Both the side plates 47, surrounding the curved part of the bottom plate 45 and forming the inner curved part 59 and the outer curved part 61, stand upright and upward from the curved part of the bottom plate 45 forming substantially arc-shaped curved part. At each end part of the side plate 47 forming the inner curved part 59 and the side plate 47 forming the outer curved part 61, a substantially U-shaped opening 49 is formed.

On both sides of the respective side plates 47, substantially parallel vertical ribs 55 that extend inward in a direction orthogonal to the curved part and are a prescribed distance apart from each other are formed at an end part of the opening 49 at each end part of the side plates 47 and at a prescribed position in proximity of the end part of the opening 49 at each end part. This forms a female joining structure 57a formed of a pair of substantially U-shapes having the vertical ribs 55 and facing each other in a plan view. The female joining structure 57a includes the vertical ribs 55 that are formed inward in the direction orthogonal to the curved part of the facing side plates 47, respectively. That is, the female joining structure 57a has a pair of substantially U shapes that face each other in a plan view.

Similarly to the openings 49 at the both end parts of the side plates 47, a different pair of mutually facing substantially U-shapes of another female joining structure 57b are formed at a prescribed position in the middle of the curved part that is a prescribed distance apart from one end part of the curved part and in proximity of the prescribed position in the middle of the curved part. The female joining structure 57b formed at the prescribed position in the middle of the curved part includes the substantially parallel vertical ribs 55 having the prescribed height. The vertical ribs 55 are formed at the prescribed position in the middle of the curved part that is the prescribed distance apart from the one end part of the curved part and in the proximity of the prescribed position in the middle of the curved part, respectively. The vertical ribs 55 facing each other are formed inward in the direction orthogonal to the curved part of the respective mutually facing side plates 47.

As mentioned above, the side plates 47 form the substantially arc-shaped curved part formed of the outer curved part 61 and the inner curved part 59. On the side plates 47 of the inner curved part 59 and the outer curved part 61, elbow sections 51, which also serve as the vertical ribs 55 protruding inward, are formed, being a prescribed distance apart from each other, at prescribed positions in proximity of the opening 49 and at the prescribed position in the middle of the curved part. The elbow sections 51 are provided so as to link the opening 49 on the one end part of the bent trough 41 and the prescribed position in the middle of the curved part. That is, the elbow section 51 provided at the prescribed position in the proximity of the opening 49 also serves as the inner vertical rib 55 of the female joining structure 57a in the proximity of the opening 49, and the elbow section 51 formed at the prescribed position in the middle of the curved part also serves as the inner vertical rib 55 of the other female joining structure 57b.

Horizontal ribs 53 are provided at upper parts of both ends of the elbow sections 51, which also serve as the vertical ribs and are formed, being the prescribed distance apart from each other, at the prescribed position in the proximity of the opening 49 and at the prescribed position in the middle of the curved part. Each of the horizontal ribs 53 is formed so as to link the vertical rib 55 on an inner side of the female joining structure 57a and the vertical rib 55 on an inner side of the female joining structure 57b formed at the prescribed position in the middle of the curved part. That is, the horizontal rib 53 is formed so as to link the vertical ribs 55 that are formed on both ends of the elbow section 51. A metal fitting to install the trough lid 43 can be attached to the horizontal rib 53. Since the horizontal rib 53 serves as a metal fitting attachment part for attaching a metal fitting for installing a trough lid as above, the trough lid 43 can be fixed to the horizontal rib 53 of the bent trough 41 by using the metal fitting, of which illustration is omitted, when the trough lid 43 is put over the bent trough 41.

The horizontal rib 53 is formed in a substantially horizontal direction so as to be orthogonal to the vertical rib 55 provided in the substantially vertical direction. Both end parts of the horizontal rib 53 of the inner curved part 59 and both end parts of the horizontal rib 53 of the outer curved part 61 are disposed on the same respective centerlines from the center of curvature of the curved part. That is, the horizontal rib 53 of the outer curved part 61 is formed longer than the horizontal rib 53 of the inner curved part 59. Also, it is unnecessary to provide vertical ribs for reinforcement on outer sides of the side plates 47 forming the inner curved part 59 and the outer curved part 61. At this time, the vertical ribs 55 of the inner curved part and the vertical ribs 55 of the outer curved part are formed on the same centerline, and thus a width between the vertical ribs 55 of an substantially U-shaped opening on a side of the outer curved part 61 forming the pair of the substantially U-shapes of the female joining structure 57a is larger than a width between the opposite vertical ribs 55 of an substantially U-shaped opening on a side of the inner curved part 59.

At least bottom plate surfaces of the female joining structures 57a formed at the both end parts of the curved part are formed a prescribed height below bottom plate surfaces of parts other than the female joining structures 57a. This enables to match levels of upper surface positions of bottom parts of another trough and the bent trough 41 when stacking and connecting a male joining structure of the other trough onto the female joining structure 57a. At a substantially middle of a surface of the bottom plate 5 that corresponds to the bottom parts of the female joining structures 57a formed of the mutually facing substantially U-shapes, a groove 63 having a prescribed length is formed in a width direction of the trough. A function of the groove 63 will be described below.

As shown in FIG. 8 and FIG. 9B, at the female joining structures 57a, the side plates 47 protrude to a back surface of the bottom plate 45 for a prescribed height to form leg parts 65. That is, on a bottom surface side of the bent trough 41, the leg parts 65 protrude downward such that most parts of the bottom surface of the bottom plate 45 other than the leg parts 65 are positioned above the leg parts 65. Thus, when the branching trough 1 is installed on a ground, the leg parts 65 support the bottom plate 45 the prescribed height above the ground surface, with a space being created on the back surface of the bottom plate 45.

In FIG. 8, on the back surface of the bottom plate 45, a hollow columnar protrusion 67 protruding downward from the bottom plate 45 with a prescribed height is formed at a prescribed position in the above-mentioned space created by the inner curved part 59 and the outer curved part 61. Also, only one or more of the hollow columnar protrusion 67 may be formed on the back surface of the bottom plate 45 as necessary, or, in addition to the above, a bottom surface reinforcement rib 69 connecting the inner curved part 59 and the outer curved part 61 may be formed on the back surface of the bottom plate 45. The bottom surface reinforcement rib 69 is formed along a direction toward the center of curvature of the inner curved part 59 and the outer curved part 61. At this time the bottom surface reinforcement rib 69 may be formed on a same straight line including the hollow columnar protrusion 67, with the hollow columnar protrusion 67 being in the middle, or may be formed a prescribed distance apart from the hollow columnar protrusion 67.

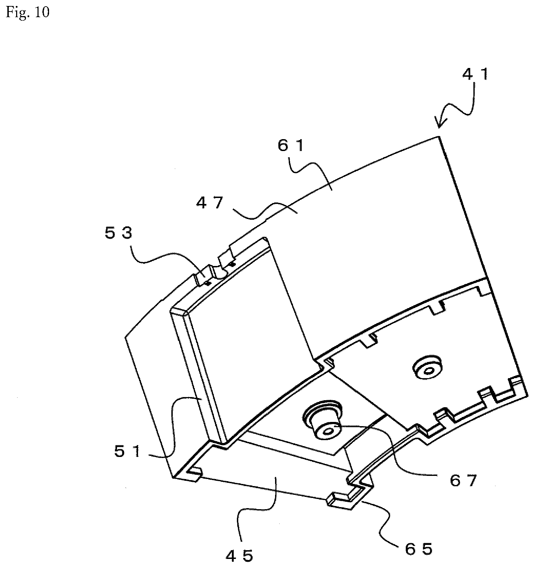

Also, as shown in FIG. 10, a plurality of the hollow columnar protrusions 67 may also be disposed. In the illustrated example, the hollow columnar protrusions 67 are provided, respectively, on a center of a width direction of the back surface of the bottom plate 45 between the elbow section 51 of the inner curved part 59 and the elbow section 51 of the outer curved part 61 of the side plates 47, and on a center of a width direction of the back surface of the bottom plate 45 that is midway between the female joining structure 57b further down, which is provided in the middle of the curved part being the prescribed distance apart from the one end of the curved part, and the female joining structure 57a that is provided at the other end parts of the curved part.

At this time, providing the plurality of the hollow columnar protrusions 67 can normally provide both effects of the anchor bolt fixing hole and bottom surface reinforcement. Also, the bottom surface reinforcement ribs 69 may be provided in addition to the hollow columnar protrusions 67. However, rather than that, providing the plurality of the hollow columnar protrusions 67 at prescribed intervals can increase the number of options for the fixing positions of the anchor bolts and, at the same time, the branching trough 1 can be fixed more firmly by fixing the bolts at the plurality of positions.

Also, it is possible to have more spaces without obstacles on the back surface of the trough than in the case of providing the bottom surface reinforcement ribs 69 in addition, and thus it is more preferable to provide the plurality of the hollow columnar protrusions 67. At this time, as shown in the drawings, at the side parts of the side plate, short ribs of a bent structure may be provided, or may not be provided, only in the proximities of the end parts of the side plate.

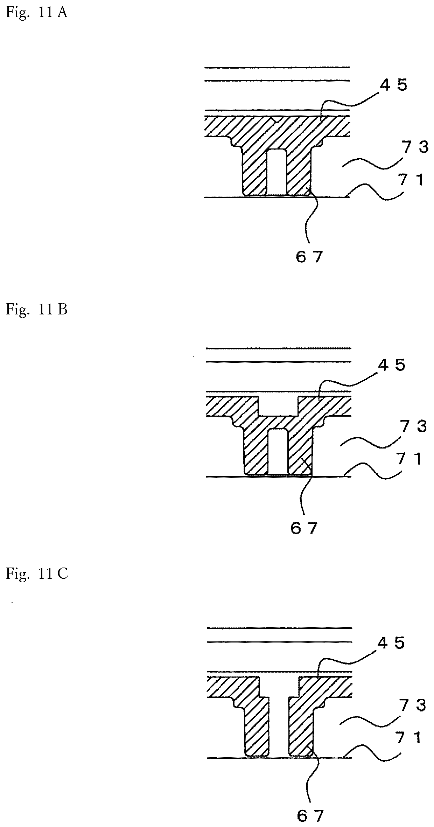

FIG. 11A is an enlarged cross-sectional view of proximity of the hollow columnar protrusion 67. As shown in the drawing, the hollow columnar protrusion 67 is substantially circular (a cylindrical shape) and hollow at a lower part. That is, the bottom plate 45 blocks an upper part of the hollow columnar protrusion 67. Also, a minute concave part is formed on an upper surface of the bottom plate 45 on the upper part of the hollow columnar protrusion 67. Preferably, the hollow columnar protrusion 67 has an outer diameter of approximately 33 mm, an inner diameter (a hole part) of 10 mm, a height (the protruded height from the bottom surface of the bottom plate 45) of at least 8 mm or more and 30 mm or less, for example.

To utilize the hollow columnar protrusion 67, similarly to the above-mentioned branching trough 1, firstly, as shown in FIG. 11B, a guide hole having a prescribed size is provided, with the above-mentioned minute concave part as a mark, in the bottom plate 45 at the upper part of the hollow columnar protrusion 67. At this time, the guide hole to be provided in the bottom plate 45 is larger than an inner diameter of a hollow of the hollow columnar protrusion 67. Next, as shown in FIG. 11C, a hole having approximately the same diameter as the hollow part of the hollow columnar protrusion 67 is provided from the upper or lower part such that a through hole interconnects an upper surface side of the bottom plate 45 and the lower part of the hollow columnar protrusion 67. The hollow columnar protrusion 67 may be provided as a two-level hole, or, alternatively, a one-level through hole having approximately the same diameter as the hollow part of the hollow columnar protrusion 67 may be provided without providing the guide hole.

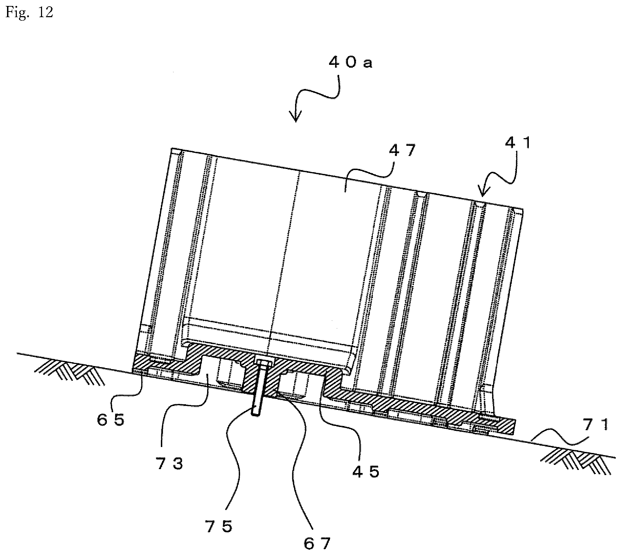

FIG. 12 is a view showing a bent trough fixing structure 40a in which the bent trough 41 is fixed to a ground surface 71 after the above process. The hollow columnar protrusion 67 protruding downward from the back surface of the bottom plate 45 with the prescribed height is formed as a fixing part for an anchor bolt 75. The hollow columnar protrusion 67 has a hollow cylindrical structure, and, by inserting and screwing the anchor bolt 75 into the hollow part of the hollow cylindrical structure, the bent trough 41 is fixed to the asphalt or concrete ground surface 71.

At this time, as mentioned above, the leg parts 65 protruding downward are formed at the end parts of the bent trough 41, and thus, when the bent trough 41 is fixed to the ground surface 71, a space 73 can be created between the bottom plate 45 and the ground surface 71.

Note that, as shown in FIG. 11A, if the fixing with the anchor bolt 75 is not to be performed, a top surface part of the hollow columnar protrusion 67 is blocked by the bottom plate 45 and this can prevent entry of foreign substances into the bent trough 41 from the lower part. On the other hand, if the fixing with the anchor bolt 75 is to be performed, the top surface of the hollow columnar protrusion 67 may be opened in advance. That is, the top surface of the hollow columnar protrusion 67 may be blocked by the bottom plate 45 or may be opened.

Other than the substantially cylindrical shape as shown in the drawings, the hollow columnar protrusion 67 may also be in other shapes, such as a substantially square column shape or a substantially polygon shape, in which the anchor bolt fixing hole can be formed. Also, the hollow columnar protrusion 67 may be disposed at a plurality of locations. That is, at least the one hollow columnar protrusion 67 is to be provided to form the anchor bolt fixing part.

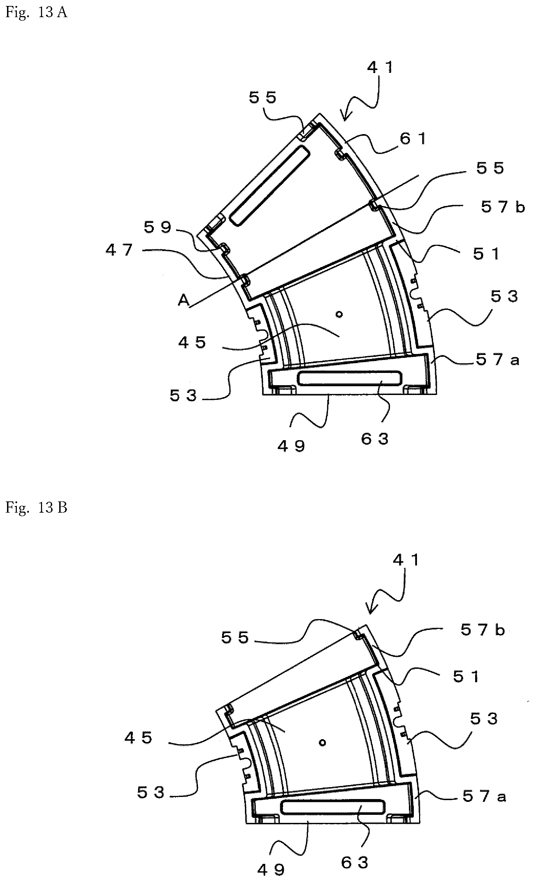

Next, one example of a method for using the bent trough 41 will be described. FIG. 13A is a plan view of the bent trough 41. As mentioned above, the bent trough 41 has, in addition to the female joining structures 57a formed at the openings 49 at the both end parts thereof, the female joining structure 57b formed in the middle of the curved part. That is, the female joining structure 57b is formed by forming the vertical ribs 55 at the elbow section 51 formed at the prescribed middle position between the one end part and the other end part that is the prescribed distance apart from the one end part of the curved part of the bent trough 41, and at the prescribed position in proximity thereof, in which the vertical ribs 55 with the prescribed height are substantially parallel to each other extending inward from the side plates 47 in a direction perpendicular to the bottom plate 45.

To the outer vertical ribs 55 of the female joining structure 57b, in which the vertical ribs 55 are formed substantially parallel to each other with the prescribed height extending inward from the side plate 47 in the direction perpendicular to the bottom plate 45, the bent trough 41 is cut along the vertical ribs 55 (a line A in the drawing) as to connect outer side surfaces of the vertical ribs 55, which are formed orthogonal to curves forming the curved part, of the inner curved part 59 and the outer curved part 61. By cutting in this way, as shown in FIG. 13B, the bent trough 41 can be used as the bent trough 41 having a smaller bending angle than the bending angle before cutting. That is, the bent trough 41 before cutting includes in an interior thereof a structure, which can be obtained after cutting, of a bent trough having the smaller bending angle than the bending angle before cutting.

In the bent trough 41 that has been cut as above, the female joining structure 57a, which has been formed at the opening 49 before cutting, is formed at the one end part, and the female joining structure 57b, which has been formed at the prescribed middle position of the curved part before cutting, is formed at the other end part. That is, the female joining structures 57a and 57b are formed at both end parts of a curve shape, respectively, and thus, like the bent trough 41 before cutting, other troughs and the like can be connected to each end part to be used.

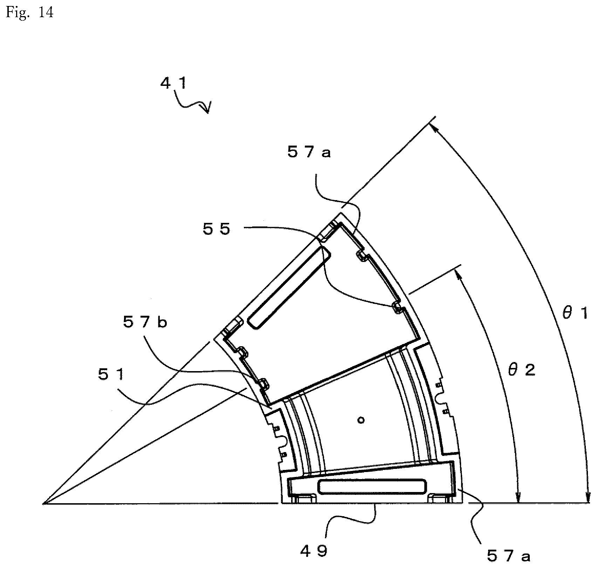

FIG. 14 is a view showing the bending angle of such the bent trough 41. For example, when a bending angle of the curved part connecting the openings 49 at both the end parts of the bent trough 41 before cutting (θ1 in the drawing) is 45°, a bending angle after cutting (θ2 in the drawing) is 30°. When the bending angle of the curved part connecting the openings 49 at both the end parts of the bent trough 41 before cutting (θ1 in the drawing) is 60°, the bending angle after cutting (θ2 in the drawing) is 45°. When the bending angle of the curved part connecting the openings 49 at both the end parts of the bent trough 41 before cutting (θ1 in the drawing) is 90°, the bending angle after cutting (θ2 in the drawing) is 60°. As above, the bending angle can be adjusted by cutting. Also, as mentioned above, the bent trough 41 with the small bending angle after cutting has the female joining structures 57a and 57b at both the end parts thereof and can be connected to other troughs and the like. At this time, needless to say, an angle from an open end of the bent trough 41 to the female joining structure 57b formed at the prescribed middle position of the curved part is to be set at 60°, 45°, or 30°, according to the above-mentioned angle before cutting.

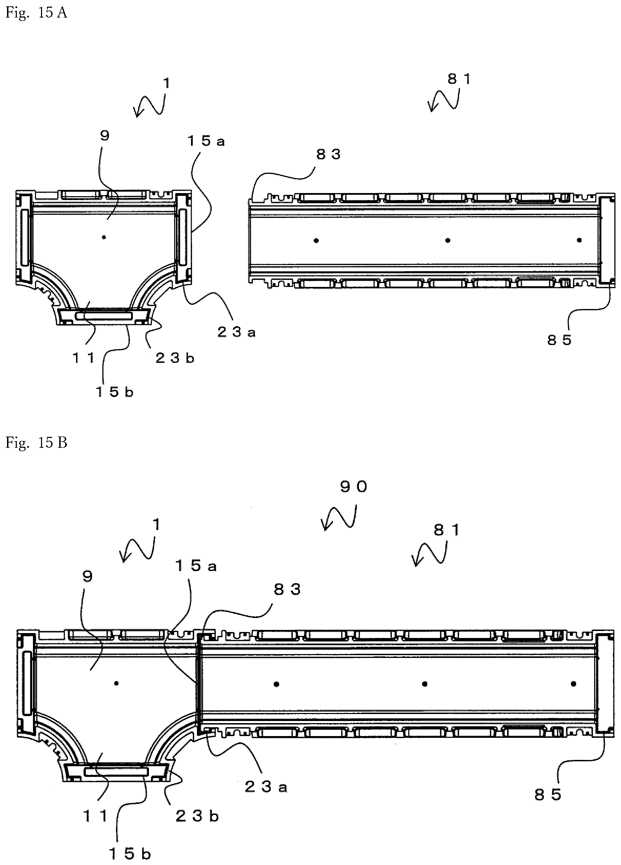

Next, a trough connecting structure using the branching trough 1 will be described. FIG. 15A and FIG. 15B are views showing a connection process of a connection structure (a trough connection structure 90) of the substantially T-shaped branching trough 1 and a straight trough 81. The straight trough 81 has on one end a male joining structure 83 and on the other end a female joining structure 85 being formed. A plurality of the straight troughs 81 are disposed in a longitudinal direction and the male joining structure 83 of one of the adjacent straight troughs 81 is inserted down into the female joining structure 85 of the other adjacent straight trough 81 to be connected, thereby fitting the female joining structure 85 with the male joining structure 83 together.

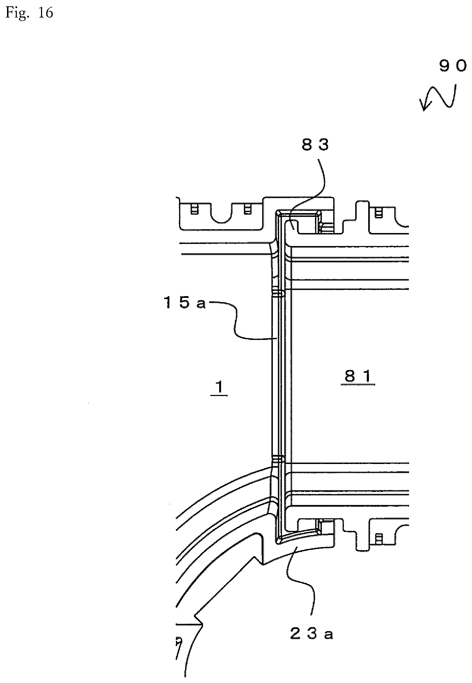

In the trough connection structure 90, as shown in FIG. 15A, the female joining structure 23a at the opening 15a of the branching trough 1 and the male joining structure 83 of the straight trough 81 are disposed so as to face each other, and then the male joining structure 83 of the straight trough 81 is inserted down into the female joining structure 23a of the branching trough 1 as in FIG. 15B so that the branching trough 1 and the straight trough 81 can be interconnected. Here, the horizontal rib 19 of the branching trough 1 can be the metal fitting attachment part and may be provided diagonally at two positions in the main trunk section 9 and in the curved part 13. Similarly, the metal fitting attachment part may be provided at all four positions of the horizontal ribs 19 including two positions in the main trunk section 9 and two positions in the branching section 11. In the drawings of FIG. 16 or after, drawings with only the two diagonally formed metal fitting attachment parts will be shown for simplicity. However, it is not intended to limit to form the metal fitting attachment parts at the diagonal two positions, and all cases including the metal fitting attachment parts attached at two positions in the curved part 13 or forming the metal fitting attachment parts at all the four positions of the horizontal ribs 19 are possible.

FIG. 16 is a partially enlarged view of the trough connection structure 90. As mentioned above, the female joining structure 23a is formed of the vertical ribs that are parallel to each other. Also, the male joining structure 83 has a flange part with an end part thereof having an extended width, and the flange part fits between the vertical ribs of the female joining structure 23a so that the two are interconnected. Instead of being connected to the opening 15a of the main trunk section 9 of the branching trough 1, the straight trough 81 may be connected to the opening 15b of the branching trough 1. As above, in the trough connection structure 90, the male joining structure 83 of the straight trough 81 having a prescribed length and a main body with a substantially uniform cross-sectional diameter is connected to at least one of the female joining structures 23a and 23b at the openings 15a and 15b of the substantially T-shaped branching section 11.

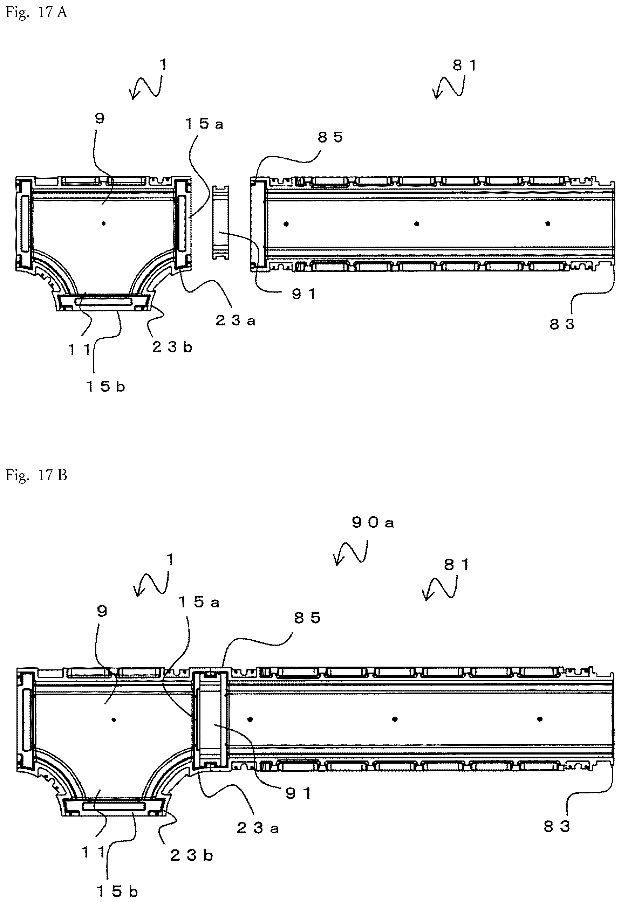

Next, another trough connection structure using the branching trough 1 will be described. FIG. 17A and FIG. 17B are views showing a connection process of a connection structure (a trough connection structure 90a) of the substantially T-shaped branching trough 1 and the straight trough 81.

In the trough connection structure 90a, as shown in FIG. 17A, the female joining structure 23a at the opening 15a of the branching trough 1 is disposed facing the female joining structure 85 of the straight trough 81. That is, the female joining structures of the branching trough 1 and the straight trough 81 face each other. Here, as shown in FIG. 17B, the female joining structures of the branching trough 1 and the straight trough 81 that are disposed facing each other are connected to each other by a male-male conversion connection adaptor 91.

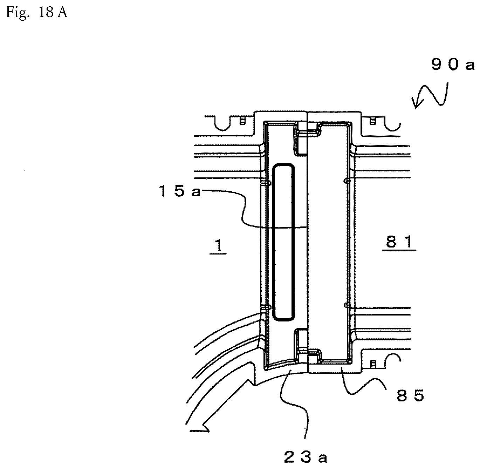

FIG. 18A is an enlarged view showing a state in which the female joining structure 23a of the branching trough 1 is disposed facing the female joining structure 85 of the straight trough 81. As mentioned above, each of the female joining structures 23a and 85 is formed in the substantially U shape with the vertical ribs that are parallel to each other. That is, the U-shaped parts of the female joining structures 23a and 85 are disposed side by side and the openings are disposed facing each other.

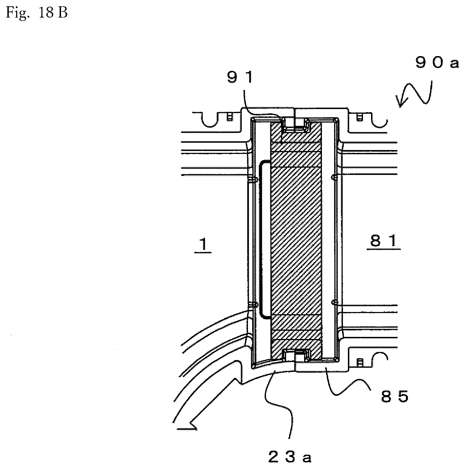

As shown in FIG. 18B, the male-male conversion connection adaptor 91 is used in the present embodiment. The male-male conversion connection adaptor 91 is in a shape having, at each end part of a width direction thereof, a center part in a thickness direction thereof being cutout. That is, each end part of the width direction of the male-male conversion connection adaptor 91 is in a substantially U shape, opening outward in a plan view.

The male-male conversion connection adaptor 91 may have an opening in a flat plate-like structure with a substantially U-shaped opening that opens outward at each end, or a substantially U-shaped bent structure, and the cutout part may be provided at the center of substantially U-shaped and parallel fitting parts, and the substantially U-shaped cutout part opening outward may be fitted with the facing two female joining structures.

The male-male conversion connection adaptor 91 is disposed as if striding across the female joining structure 23a of the branching trough 1 and the female joining structure 85 of the straight trough 81, fitting the vertical ribs of the female joining structure 23a and the female joining structure 85 to the cutout part at the center part of the male-male conversion connection adaptor 91, so that the female joining structure 23a and the female joining structure 85 can be connected. In this way, in the trough connection structure 90a, the female joining structure 85 of the straight trough having the prescribed length and the main body with the substantially uniform cross-sectional diameter is connected to at least one of the female joining structures 23a and 23b at the openings 15a and 15b of the substantially T-shaped branching trough 1 via the male-male conversion connection adaptor 91.

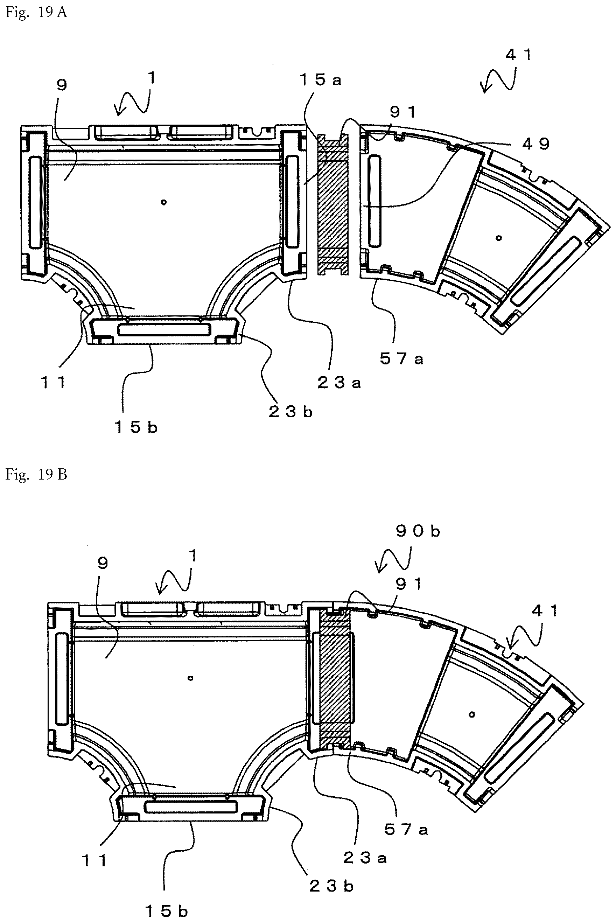

Next, another trough connection structure using the branching trough 1 will be described. FIG. 19A and FIG. 19B are views showing a connection process of a connection structure (a trough connection structure 90b) of the substantially T-shaped branching trough 1 and the bent trough 41.

In the trough connection structure 90b, as shown in FIG. 19A, the female joining structure 23a at the opening 15a of the branching trough 1 is disposed facing the female joining structure 57a of the bent trough 41. That is, the female joining structures of the branching trough 1 and the bent trough 41 face each other.

Similarly to the above-mentioned trough connection structure 90a, the male-male conversion connection adaptor 91 is used also in the present embodiment. The male-male conversion connection adaptor 91 is disposed as if striding across the female joining structure 23a of the branching trough 1 and the female joining structure 57a of the bent trough 41, fitting the vertical ribs of the female joining structure 23a and the female joining structure 57a to the cutout part at the center part of the male-male conversion connection adaptor 91, so that the female joining structure 23a and the female joining structure 57a can be connected. In this way, in the trough connection structure 90b, the female joining structure 57a formed at the opening 49 at one end part of the bent trough41 is connected to at least one of the female joining structures 23a and 23b of the openings 15a and 15b of the substantially T-shaped branching trough 1 via the male-male conversion connection adaptor 91. Also, the facing two female joining structures may be fitted into the cutout part at the center part of the substantially U shaped cross section in which outer sides of the substantially U-shaped and substantially parallel straight parts open outward.

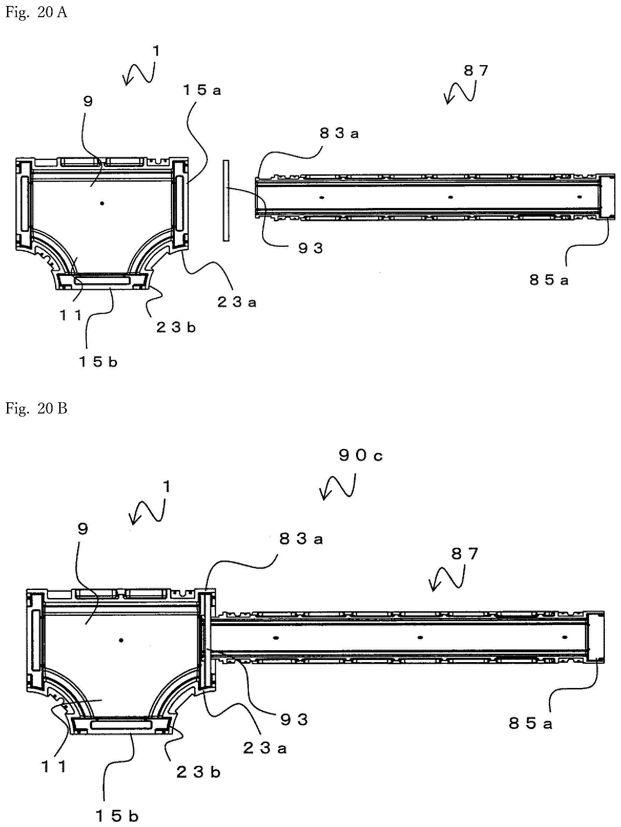

Next, another trough connection structure using the branching trough 1 will be described. FIG. 20A and FIG. 20B are views showing a connection process of a connection structure (a trough connection structure 90c) of the substantially T-shaped branching trough 1 and a small-diameter trough 87.

Similarly to the above-mentioned straight trough 81, the small-diameter trough 87 is a straight trough having a substantially uniform cross-sectional diameter and has on one end a male joining structure 83a and on the other end a female joining structure 85a being formed. As mentioned above, the small-diameter trough 87 can be connected to the other small-diameter trough 87 by joining the male joining structure 83a with the female joining structure 85a. However, the small-diameter trough 87 has a smaller width and a smaller height compared to the straight trough 81. Thus, it is impossible to directly connect the female joining structure 23a of the branching trough 1 with the male joining structure 83a of the small-diameter trough 87.

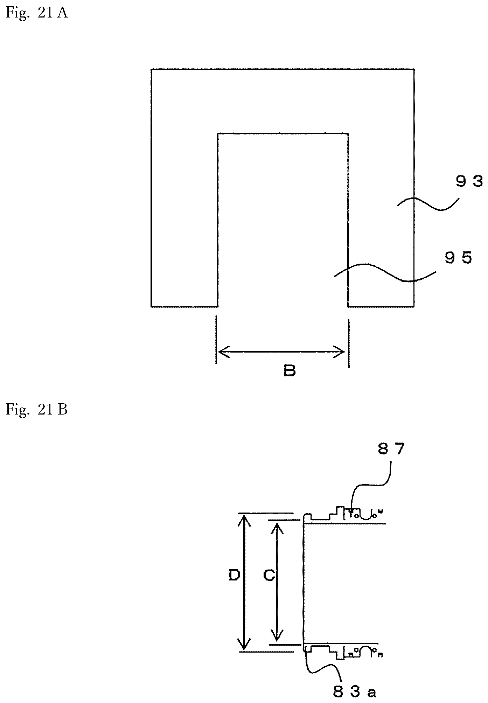

Accordingly, an end plate 93 is used in the present embodiment. FIG. 21A is a front view of the end plate 93. The end plate 93 is in a substantially U shape with an opening 95 being formed at a lower or upper part thereof. The opening 95 has a prescribed size (a width B in the drawing). On the other hand, as shown in FIG. 21B, in the male joining structure 83a of the small-diameter trough 87, a width of a flange part at a tip end thereof is D and a width C further inside is formed smaller than the width D of the flange part. At this time, the sizes are formed as D > B > C. Thus, when the end plate 93 is inserted into the width C part of the male joining structure 83a of the small-diameter trough 87, the flange part of the male joining structure 83a with the larger width is locked by the end plate 93.

As shown in FIG. 20B, in the trough connection structure 90c, the male joining structure 83a of the small-diameter trough 87 is disposed at the opening 95 of the end plate 93 so as to be fitted and connected to the opening 95 of the end plate 93 with the flange part of the male joining structure 83a of the small-diameter trough 87 as a stopper structure. This can fix the male joining structure 83a of the small-diameter trough 87 to the end plate 93. Here, if there is a pulling-out force applied onto the small-diameter trough 87, the male joining structure 83a is butted against the end plate 93, and thus the small-diameter trough 87 never comes off the branching trough 1.

Also, the end plate 93 is in a square shape having a wider width than a distance between the facing vertical ribs 21 of at least one of the female joining structures 23a and 23b at the openings 15a and 15b of the substantially T-shaped branching trough 1. Thus, when the end plate 93 is inserted between the vertical ribs of the female joining structure 23a or 23b, the end plate 93 is fixed to the female joining structure 23a or 23b. The end plate 93 preferably has a prescribed thickness such that the end plate 93 is prevented from rotating in an oblique direction from the opening 15a when the end plate 93 is disposed at the female joining structure 23a of the opening 15a. If the end plate is in a shape having an opening at a lower side of the center of the end plate as shown in FIG. 21A, it is preferable, as described below, that protruded parts are formed at lower end parts of both sides of the opening of the end plate, and the protruded parts can be fitted into the groove 31 formed in the female joining structures 23a or 23b of the branching trough 1. Fitting the end plate into the groove of the female joining structure in this way can also prevent the rotation of the end plate in the oblique direction.

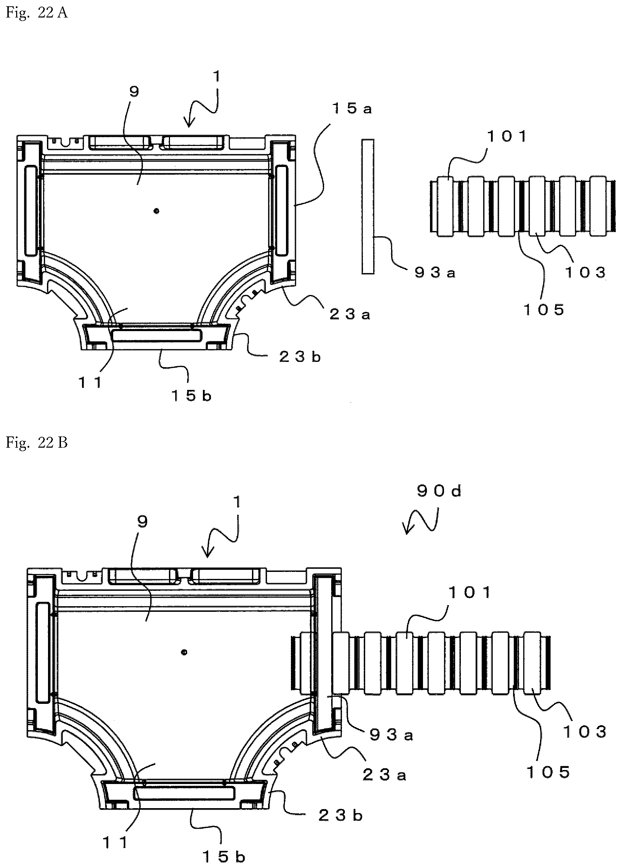

Next, a trough connection structure with a conduit, which is another cable protection member, using the branching trough 1 will be described. FIG. 22A and FIG. 22B are views showing a connection process of a connection structure (a trough connection structure 90d) of the substantially T-shaped branching trough 1 and a conduit.

In the present embodiment, the conduit to be connected to the branching trough 1 is a rectangular conduit 101 having an independent corrugated structure. The rectangular conduit 101 has a large-diameter part 103 with a rectangular cross section and a small-diameter part 105 with a circular cross section that are formed alternately. Also, at either of the female joining structures 23a and 23b at the openings 15a and 15b of the substantially T-shaped branching trough 1, an end plate 93a in a half-split structure, which can be split vertically into halves, is to be disposed.

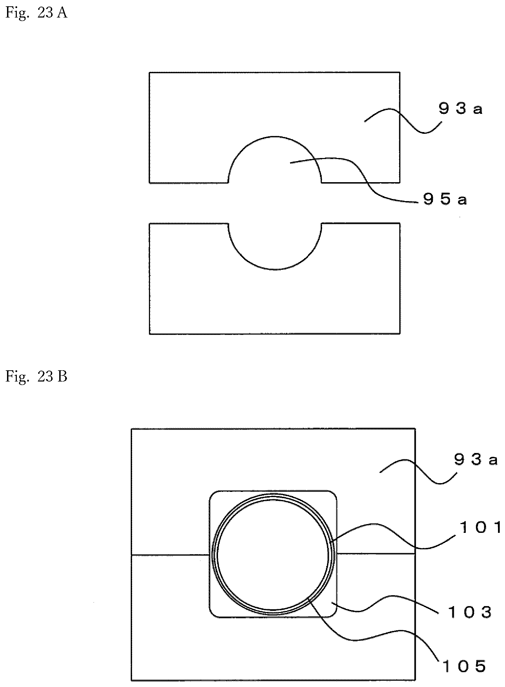

FIG. 23A is a front view showing the end plate 93a. As mentioned above, the end plate 93a can be split vertically into halves and openings 95a are formed at parts that face each other when being split. In the illustrated example, each of the opening 95a is semicircular, and the split end plates 93a are butted against each other to form the substantially circular opening 95a. The end plate 93a preferably also has a prescribed thickness such that the end plate 93a is prevented from rotating in an oblique direction from the opening 15a when the end plate 93a is disposed at the female joining structure 23a of the opening 15a. It is preferable, as described below, that protruded parts are formed at a lower end part of the end plate, and the protruded part can be fitted into the groove 31 formed in the female joining structure 23a or 23b of the branching trough 1. Fitting the end plate into the groove of the female joining structure in this way can also prevent the rotation of the end plate in the oblique direction.

An inner diameter of the substantially circular opening 95a formed at this time is slightly larger than an outer diameter of the small-diameter part 105 of the rectangular conduit 101 and is slightly smaller than an outer diameter (a side length) of the large-diameter part 103 of the rectangular conduit 101. Thus, as shown in FIG. 23B, the small-diameter part 105 of the rectangular conduit 101 is held by the opening 95a of the end plate 93a so as to fix the rectangular conduit 101 to the end plate 93a. Here, when a pulling-out force is applied to the rectangular conduit 101, the large-diameter part 103 is to be butted against the end plate 93a such that the rectangular conduit 101 never comes off the branching trough 1. Note that the number of conduits to be fixed to the one end plate 93a is not necessarily one, and may be two or more.

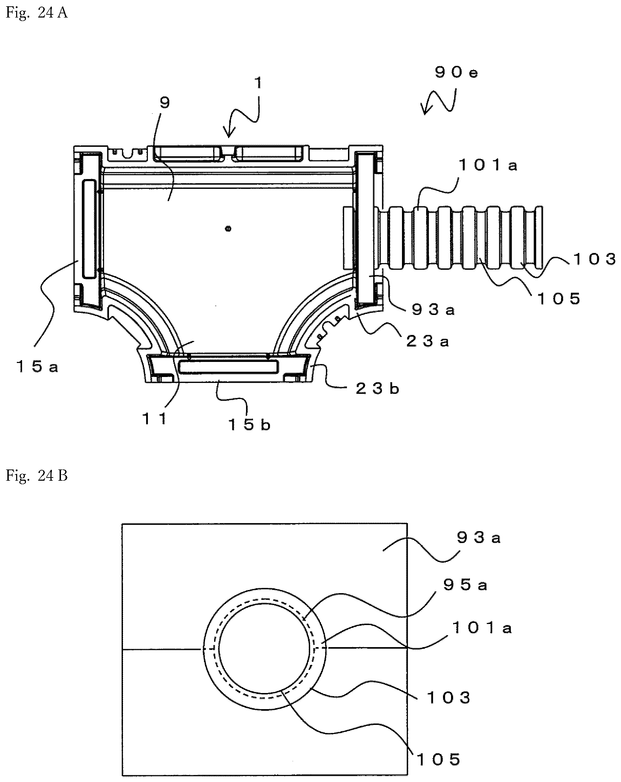

Also, the conduit having the independent corrugations is not limited to the rectangular conduit 101. FIG. 24A is a view showing a trough connection structure 90e in which the branching trough 1 and an independent corrugated conduit 101a are connected. The independent corrugated conduit 101a is similar to the rectangular conduit 101 in that the large-diameter parts 103 and the small-diameter parts 105 are alternately formed. However, the cross-sectional shape of the large-diameter part 103 is circular, instead of rectangular. That is, both the large-diameter parts 103 and the small-diameter parts 105 have circular cross sections in the independent corrugated conduit 101 a.

The inner diameter of the substantially circular opening 95a formed in the end plate 93a is slightly larger than the outer diameter of the small-diameter part 105 of the independent corrugated conduit 101a and is slightly smaller than the outer diameter of the large-diameter part 103 of the independent corrugated conduit 101a. Thus, as shown in FIG. 24B, the small-diameter part 105 of the independent corrugated conduit 101a is held by the opening 95a of the end plate 93a so as to fix the independent corrugated conduit 101a to the end plate 93a. When a pulling-out force is applied to the independent corrugated conduit 101a, the large-diameter part 103 is to be butted against the end plate 93a such that the independent corrugated conduit 101a never comes off the branching trough 1. As above, in the trough connection structures 90d and 90e, the rectangular conduit 101 or the independent corrugated conduit 101a is fixed to the opening 95a of the end plate 93a, and the end plate 93a is fixed to the female joining structure of the branching trough 1 so that the branching trough 1 and the conduits are connected.

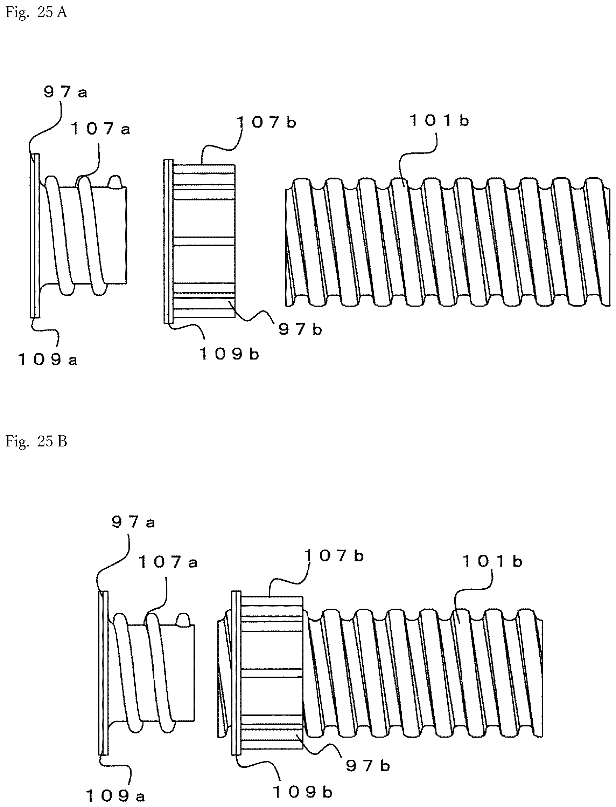

Next, another trough connection structure using the branching trough 1 will be described. FIG. 25A to FIG. 25C are views showing a method for fixing an inner connection member 97a and an outer connection member 97b to an end part of a spirally corrugated conduit 101b. In the present embodiment, a conduit to be connected to the substantially T-shaped branching trough 1 is the spirally corrugated conduit 101b having a spirally corrugated structure with a circular cross section.

The inner connection member 97a has a cylindrical part 107a and a flange part 109a. The cylindrical part 107a has a circular cross section and an outer peripheral surface formed with spiral grooves that can fit with spiral shapes of an inner peripheral surface of the spirally corrugated conduit 101b. The flange part 109a is formed at an end part of the cylindrical part 107a with an increased diameter. Also, the outer connection member 97b has a cylindrical part 107b and a flange part 109b. The cylindrical part 107b has a circular cross section and an inner peripheral surface formed with spiral grooves that can fit with spiral shapes of an outer peripheral surface of the spirally corrugated conduit 101b. The flange part 109b is formed at an end part of the cylindrical part 107b with an increased diameter.

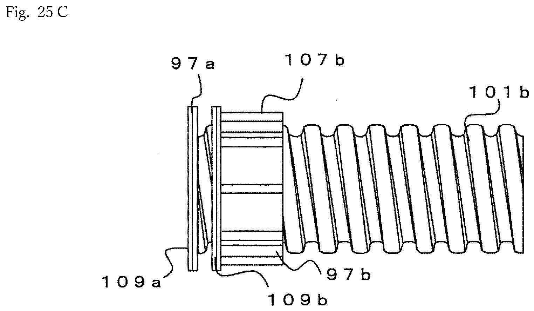

Firstly, as shown in FIG. 25B, the outer connection member 97b is attached to the end part of the spirally corrugated conduit 101b. That is, spiral corrugations on the inner peripheral surface of the cylindrical part 107b of the outer connection member 97b are screwed together with spiral corrugations on the outer peripheral surface of the spirally corrugated conduit 101b. Next, as shown in FIG. 25C, the inner connection member 97a is attached to the end part of the spirally corrugated conduit 101b. That is, spiral corrugations on the outer peripheral surface of the cylindrical part 107a of the inner connection member 97a are screwed together with spiral corrugations on the inner peripheral surface of the spirally corrugated conduit 101b. In this way, the cylindrical parts 107a and 107b of the inner connection member 97a and the outer connection member 97b are screwed together with the inner peripheral surface and the outer peripheral surface of the spirally corrugated conduits 101b, respectively, so that the inner connection member 97a and the outer connection member 97b are attached to the end part of the spirally corrugated conduit 101b.

Here, the outer connection member 97b is disposed further back from the end part of the spirally corrugated conduit 101b than the inner connection member 97a. Also, there is a space created between the flange part 109b of the outer connection member 97b and the flange part 109a of the inner connection member 97a. For example, when the cylindrical part 107a of the inner connection member 97a is screwed completely to the inner part of the spirally corrugated conduit 101b, the size of the space between the flange part 109b of the outer connection member 97b and the flange part 109a of the inner connection member 97a can be adjusted by rotating the cylindrical part 107b of the outer connection member 97b on the outer periphery of the spirally corrugated conduit 101b.

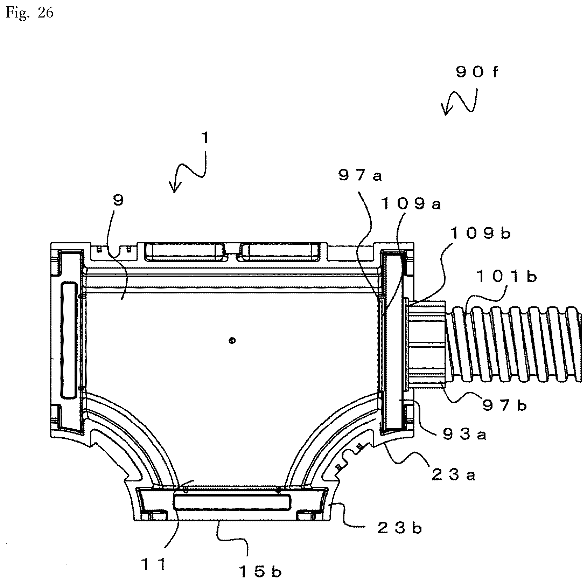

FIG. 26 is a view showing a connection structure (a trough connection structure 90f) between the substantially T-shaped branching trough 1 and a spirally corrugated conduit. At the female joining structure 23a at the opening 15a of the branching trough 1, the end plate 93a having the opening 95a into which the conduit can be inserted is disposed. At this time, the inner diameter of the substantially circular opening 95a formed in the end plate 93a is slightly larger than an outer diameter of the spirally corrugated conduit 101b and is slightly smaller than the outer diameter of the flange part 109b of the outer connection member 97b and the outer diameter of the flange part 109a of the inner connection member 97a. Thus, by holding the end plate 93a between the flange part 109a of the inner connection member 97a and the flange part 109b of the outer connection member 97b, the spirally corrugated conduit 101b is fixed to the end plate 93a.

As above, in the trough connection structure 90f, the inner connection member 97a and the outer connection member 97b are fixed to the end part of the spirally corrugated conduit 101b. Also, the spirally corrugated conduit 101b is disposed in the opening 95a of the end plate 93a, and the end plate 93a is held between the flange part 109a of the inner connection member 97a and the flange part 109b of the outer connection member 97b that are fixed to the spirally corrugated conduit 101b so as to be fixed to the branching trough 1. Thus, when a pulling-out force is applied to the end plate 93a, the spirally corrugated conduit 101b never comes off the female joining structure 23a of the branching trough 1. Also, the end plate 93a is fixed to the male joining structures 23a and 23b of the branching trough 1 such that the branching trough 1 and the spirally corrugated conduit 101b can be connected.

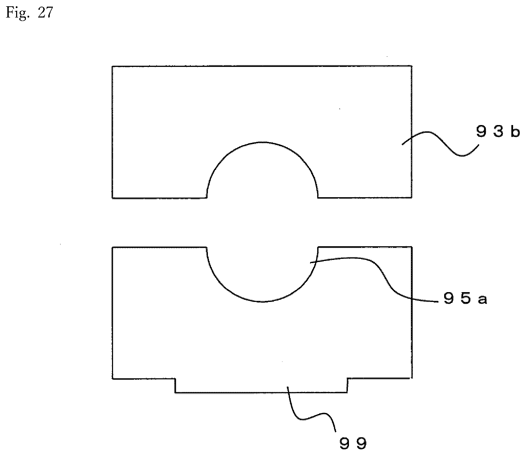

Note that, as mentioned above, each of the conduits and the troughs may be connected to the opening 15a or the opening 15b of the substantially T-shaped branching trough 1. Also, when using the end plate 93a, an end plate 93b as shown in FIG. 27 may be used in place of the end plate 93a for more secure fixing with the female joining structures 23a and 23b.

The end plate 93b has approximately the same structure as the end plate 93a except that there is a protrusion 99 formed at a bottom end of the lower end plate 93b. As mentioned above, the groove 31 having the prescribed length is formed in the substantially middle of the bottom surface of the female joining structure 23a or 23b of the branching trough 1 in the width direction of the trough. Also, a groove 63 having the prescribed length is formed in the width direction of the trough in the substantially middle of the bottom surface of the female joining structure 57a of the bent trough 41. The protrusion 99 of the end plate 93b can be fitted into the groove 31 formed in the female joining structures 23a or 23b of the branching trough 1, or in the groove 63 formed in the female joining structure 57a of the bent trough 41.

By fitting the protrusion 99 of the end plate 93b into the groove 31 or 63, the end plate 93b can be fixed to each trough with more certainty, thereby preventing the end plate 93b from rotating in the oblique direction, for example. The same effects can be obtained by forming the protrusion 99 at a lower part of the end plate 93 having an opening at an upper part thereof.

According to the above methods for connecting the substantially T-shaped branching trough 1 with the straight trough 81, the bent trough 41, the small-diameter trough 87, and each of the conduits, which may be refereed collectively as cable protection members, the connection structures between the branching trough 1 and various types of cable protection members can be obtained.

In more detail, the three openings 15a and 15b of the branching trough 1 are provided with female joining structures 23a and 23b, respectively, by forming the pair of substantially U-shapes with the mutually facing substantially parallel vertical ribs 21 of the prescribed height extending inwardly from the side plates 7 in the perpendicular direction formed at the ends of the openings 15a and 15b and at positions in proximities of the ends of the openings 15a and 15b that are the prescribed distance apart from the ends of the openings 15a and 15b. At this time, to the space between the substantially parallel end faces formed by the vertical ribs 21 in the female joining structure 23a or 23b formed at the end of at least one of the three openings 15a and 15b of the branching trough 1, either the flange part of the male joining structure of the trough may be directly fixed, the female joining structure of the trough may be fixed via the male-male conversion connection adaptor 91, the small-diameter flange part of the male joining structure of the small-diameter trough may be fixed via the end plate, the small-diameter part of the independent corrugated conduit having the circular or rectangular cross section may be fixed by being placed between the end plates, or the end part of the spirally corrugated conduit may be fixed by screwing the inner connection member 97a and the outer connection member 97b via the end plate, sandwiching the end plate between the flange part 109a of the inner connection member 97a and the flange part 109b of the outer connection member 97b.

Here, in the present invention, similarly to the branching trough 1, the bent trough 41 also includes the female joining structures 57a and 57b using the vertical ribs 55. Thus, similarly to the branching trough 1, the bent trough 41 also can have connection structures with various types of cable protection members, such as with the male joining structure 83 of the straight trough 81, with the male joining structure 83 of the straight trough 81, with the female joining structure 85 of the straight trough 81 via the male-male conversion connection adaptor 91, and with the small-diameter trough 87 and various conduits (the rectangular conduit 101, the independent corrugated conduit 101a, the spirally corrugated conduit 101b) via any of the end plates 93, 93a, and 93b.

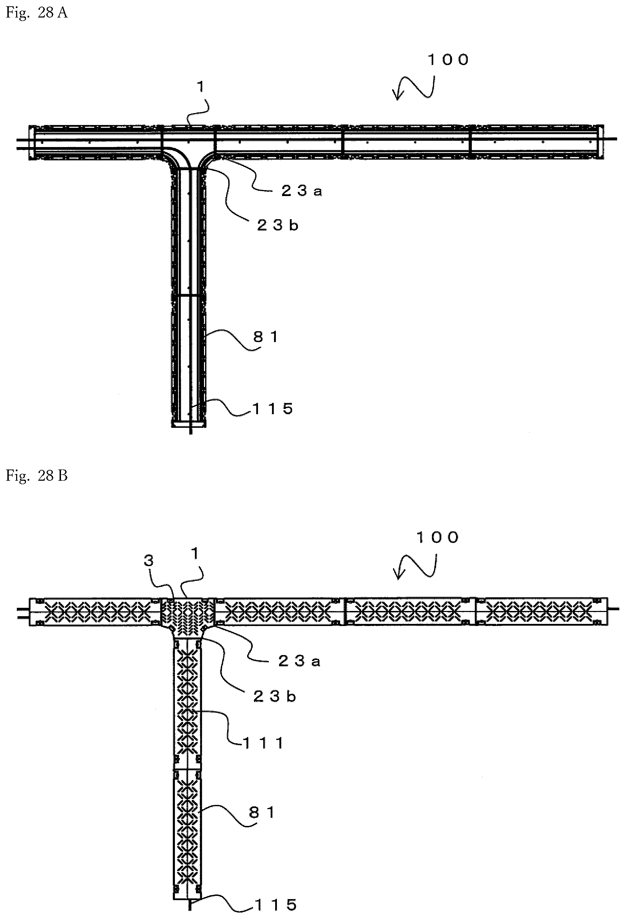

Next, a trough line using the connection structure of the branching trough will be described. FIG. 28A is a view showing a trough line 100. The trough line 100 includes the plurality of straight troughs 81 that are connected to the substantially T-shaped branching trough 1. For example, a trough line in which the plurality of straight troughs 81 of prescribed lengths are interconnected is connected to each of the openings 15a at both ends of the main trunk section 9 of the branching trough 1 and to the other opening 15b provided in the branching section 11. As mentioned above, the straight trough line is formed by interconnecting the male joining structures 83 and the female joining structures 85 of the adjacent straight troughs 81 (see FIG. 15A, etc.).

As shown in the drawing, the male joining structure 83 disposed at the one end of the interconnected structure of the plurality of the interconnected straight troughs 81 is connected to the female joining structure 23b at the opening 15b. Alternatively, the female joining structure 85 disposed at the other end of the interconnected structure of the plurality of the interconnected straight troughs 81 may be connected via the male-male conversion connection adaptor 91 to the female joining structure 23b at the opening 15b.

Cables 115 are laid inside the trough line 100. Here, inside the branching trough 1, the cables 115 are disposed so as to have either a branching structure or a bending structure. When all the cables 115 are laid, the trough lid 3 is placed over the branching trough 1 and a trough lid 111 is placed over the straight trough 81 as shown in FIG. 28B.

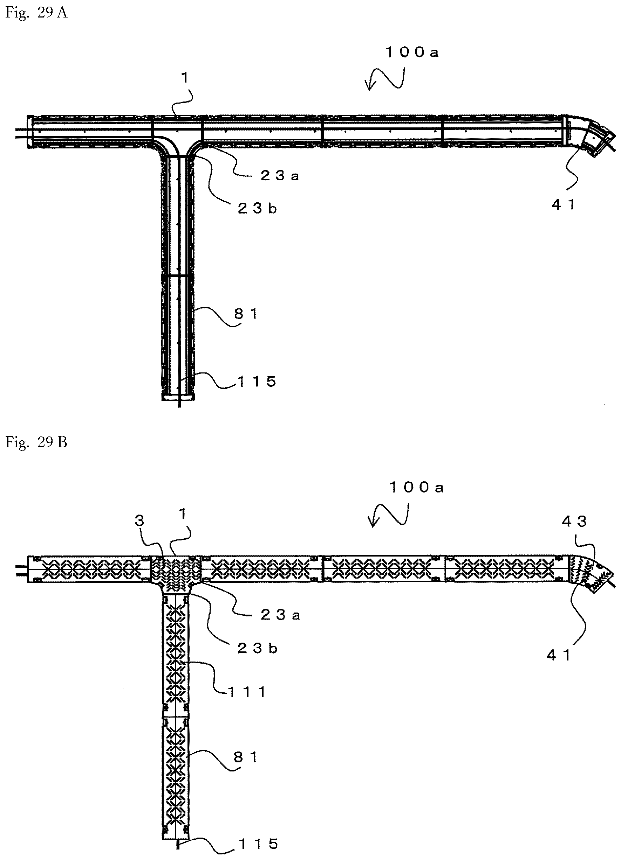

Next, another trough line will be described. FIG. 29A is a view showing a trough line 100a. The trough line 100a is approximately similar to the trough line 100 except that the bent trough 41 is partly used.

As mentioned above, also in the trough line 100a, the plurality of straight troughs 81 are connected to the openings 15a and 15b of the branching trough 1. That is, the trough line 100a has either the interconnection structure of the straight troughs 81 in which the male joining structure 83 is disposed at the one end of the straight troughs 81 or the interconnection structure of the straight troughs 81 in which the female joining structure 85 is disposed at the other end of the straight troughs 81. At least at a part of the trough line, the bent trough 41 having the female joining structures 57a on both ends thereof is disposed via the male-male conversion connection adaptor 91.

In the trough line 100a, the cables 115 are disposed inside the branching trough 1, so as to have either the branching structure or the bending structure. In such the state, the trough lid 3 is placed over the branching trough 1, the trough lid 111 is placed over the straight trough 81, and the trough lid 43 is placed over the bent trough 41 as shown in FIG. 29B.

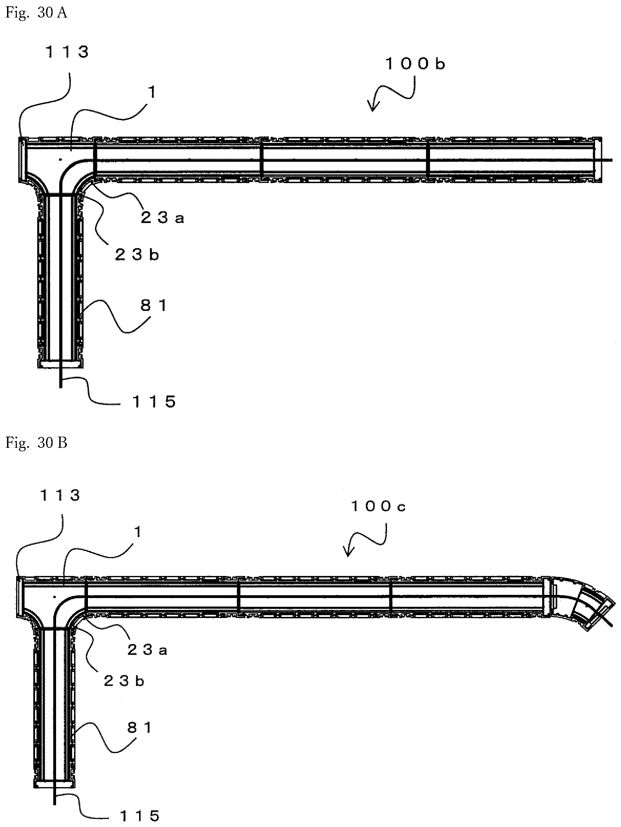

FIG. 30A is a view showing another trough line 100b. The trough line 100b is approximately similar to the trough line 100 except that a shielding plate 113 is disposed at one of the openings 15a of the branching trough 1.

In the trough line 100b, the plurality of the straight troughs 81 are connected to the one of the openings 15a of the main trunk section 9 and to the opening 15b of the branching trough 1 (see FIG. 1, etc.). The male joining structure 83 of the straight trough 81 may be directly connected to the female joining structure 23a or 23b of the branching trough 1, or the female joining structure 85 of the straight trough 81 may be connected to the female joining structure 23a or 23b of the branching trough 1 via the male-male conversion connection adaptor 91 (see FIG. 17A, etc.)

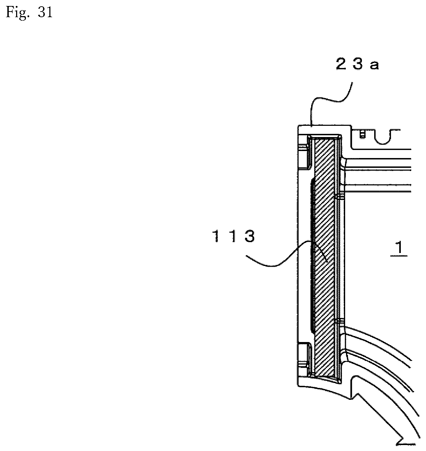

FIG. 31 is an enlarged view of proximity of the other opening 15a (the opening 15a that is on the opposite side to the opening 15a to which the plurality of the straight troughs 81 are connected) of the main trunk section 9 of the branching trough 1. The shielding plate 113 is disposed at the female joining structure 23a at the other opening 15a of the main trunk section 9 of the branching trough 1. The shielding plate 113 is a plate-like member that has no opening like the above-mentioned end plates. Fitting in the shielding plate 113 into the space between the vertical ribs of the female joining structure 23a can block the opening 15a on the one end of the branching trough 1.

The cables 115 disposed inside the respective troughs forming such the trough line 100b have only the bending structure inside the branching trough 1. That is, the cables 115 are disposed on one side of the mutually facing openings 15a, the shielding plate 113 is disposed on the other side, and the cables 115 are inserted through the remaining opening 15b of the branching section 11. Also in the trough line 100b, the trough lids that are omitted in the drawing are placed over the respective troughs.

FIG. 30B is a view showing another trough line 100c. The trough line 100c is approximately similar to the trough line 100a except that the shielding plate 113 is disposed at one of the openings 15a of the branching trough 1 as in the trough line 100b.

Similarly to the trough line 100b, the cables 115 disposed inside the respective troughs forming the trough line 100c have only the bending structure inside the branching trough 1. That is, the cables 115 are disposed on one side of the mutually facing openings 15a of the branching trough 1 and on the opening 15b of the branching section 11, and the shielding plate 113 is disposed on the other side of the mutually facing openings 15a of the branching trough 1. Also in the trough line 100c, the trough lids that are omitted in the drawing are placed over the respective troughs.

As described above, according to the present embodiments, the hollow columnar protrusion 27, with a hollow interior, protruding downward from the bottom surface is provided on the back surface of the bottom plate 5 of the branching trough 1. The hollow columnar protrusion 27 can be used as a bolt fixing structure, and, with the hollow columnar protrusion 27, the bottom plate 5 is supported at the prescribed height from the ground surface. Thus, the branching trough 1 can be fixed with the anchor bolt 37 to an ordinary gravel-spread surface or ground, as well as to an asphalt or concrete road surface or slope surface. Also, when fixing the branching trough 1 with the anchor bolt 37, providing the hollow columnar protrusion 27 can prevent stress concentration to the bottom plate 5.

Also, providing the hollow columnar protrusion 27 with the hollow interior on the back surface of the bottom plate 5 can reinforce the bottom plate 5. Thus, the thickness of the bottom plate 5 of the branching trough 1 can be reduced, thereby achieving a weight reduction of the branching trough 1.

At this time, since the thin plate-like bottom plate 5 is at the upper part of the hollow columnar protrusion 27, it is possible to have approximately the same height with a cable accommodating part of another trough that is connected to the branching trough 1. For example, when considering cable drawing performance, the bottom plate 5 can be provided at a slightly higher position than the ground surface 33, thus the bottom plate 5 can be made approximately the same height as the bottom plate of each trough connected thereto, which makes the cable drawing performance excellent.

Even if the hollow columnar protrusion 27 is not used as the bolt fixing structure, by removing a shielding part that shields the hollow part at the surface of the bottom plate 5 on the side of the base part of the hollow columnar protrusion 27, a through hole, which can be used as a water draining hole for the branching trough 1, can be formed.

Also, providing the leg parts 25 protruding to the back surface of the branching trough 1 can make the bottom plate 5 being disposed at the prescribed height from the ground surface 33. Since the bottom plate 5 is apart from the ground surface 33 by the prescribed distance, even if the ground surface 33 has unevenness, interference between the unevenness of the ground surface 33 and the branching trough 1 can be avoided. In this way, a prescribed space is created between the back surface of the bottom plate 5 and the ground surface 33, which makes the trough less affected by conditions of the ground surface 33, and thus the trough can be fixed even to asphalt or concrete road surfaces or sloped surfaces.

Also, providing the elbow section 17 on the side plate 7 of the branching trough 1 to have the bent structure can reinforce the side plate 7. Also, providing the horizontal rib 19 so as to link the elbow sections 17 of the side plate 7 makes it possible to support the both end parts of the elbow sections 17 by the horizontal ribs 19, which can further reinforce the elbow sections 17 of the side plate 7 by the horizontal ribs 19. Also, the both end parts of the elbow section 17 have the effect of reinforcing the side plate 7 as vertical ribs 21 that are orthogonal to the curving direction of the curved part of the side plate 7 on the outer periphery of the branching trough 1. This can maintain the structural strength as a whole even if the wall of the side plate 7 is not so thick. Since the vertical ribs of the elbow sections 17 of the branching trough 1 also serve as the substantially parallel inner vertical ribs of the U shapes of the female joining structures 23a and 23b, only the outer vertical ribs of the female joining structures 23a and 23b are to be provided and it is unnecessary to provide vertical ribs on the outer side of the curved part of the branching section 11 of the side plate 7.

Also, the horizontal rib 19 is used as a fixing part for the metal fitting attachment to fix the trough lid 3 over the branching trough 1, and thus, when putting the trough lid 3 on the branching trough 1, the trough lid 3 can be easily fixed.

Here, as mentioned above, the branching trough 1 is in a substantially T shape, including the straight main trunk section 9 and the branching section 11. The openings 15a are provided on both end parts of the straight main trunk section 9, and the opening 15b is provided in a direction orthogonal to the main trunk section 9 at the end part of the branching section 11 branching from the main trunk section 9. Also, at the openings 15a and 15b provided in the branching trough 1, the female joining structures 23a and 23b, which are a pair of mutually facing and substantially parallel U-shaped rib structures extending inward with the prescribed heights from the side plate 7, are formed, respectively. The female joining structures 23a and 23b provided at the openings 15a and 15b can make connections with male joining structures of the other trough, or with the female joining structures of the other straight troughs or bent troughs, etc. via the male-male conversion connection adaptor 91, and trough lines in which various types of troughs are connected can be formed.

Also, the female joining structures 23a and 23b are formed of the mutually facing side plates 7, the pair of parallel vertical ribs 21 sandwiching the side plates 7, and the bottom plate 5 linking the both. Also, the both end parts of the elbow section 17 are the inner vertical ribs 21 of the female joining structures 23a and 23b that are substantially U-shaped in the plan view and are provided at the openings 15a and 15b. Thus, the both end parts of the elbow section 17 serve not only as the vertical ribs 21 as the above-mentioned reinforcement structure but also as the vertical ribs 21 forming the fitting parts of the female joining structures 23a and 23b. For this reason, it is unnecessary to separately provide new vertical ribs other than the vertical ribs 21 on the outer sides of the female joining structures 23a and 23b.

Also, providing the end plate 93 and the like in the female joining structure 23a or 23b at the opening 15a or 15b can form connection structures in which not only the ordinary straight trough 81 but also the small-diameter trough 87 with a small cross section, and various conduits, such as the rectangular conduit 101 with an independent corrugate structure, the independent corrugated conduit 101a, and the spirally corrugated conduit 101b having the spirally corrugated structure, are connected to the branching trough 1 via the end plate 93 or the like. At this time, the female joining structures 23a and 23b are to be sized and shaped to be compatible with all connection structures so that the connection can be made stably with the troughs or the small diameter part of conduits, etc. that are to be connected.

Also, the shallow groove 31 having the prescribed length is formed in the substantially middle of the bottom surface of the mutually facing substantially U shapes of the female joining structures 23a or 23b of the branching trough 1 in the width direction of the trough. This can efficiently fix the end plate 93b having the protrusion 99 and, at the same time, prevent the rotation of the end plate 93b in the oblique direction. Thus, by providing the groove 31 on the bottom plate 5 of the female joining structure 23a of 23b and by using the end plate 93b, the branching trough 1 can be used in, in addition to the ordinary connection structures using the female joining structure 23a and 23b, fixing structures for various troughs and conduits.

As above, various types of trough lines can be built by connecting the other troughs and various conduits to the openings 15a and 15b of the branching trough 1. At this time, a branch structure in which the cables 115 disposed in the branching trough 1 branch into the cables going through the main trunk section 9 and the branching section 11 may be formed, a bending structure in which the cables 115 disposed in the branching trough 1 bend from the main trunk section 9 to the branching section 11 may be formed, or a bent line in which the shielding plate 113 is disposed at the opening 15a of the main trunk section 9 where the cables 115 are not disposed may be formed.

The bent trough 41 also has a similar structure to the above-mentioned branching trough 1. Thus, similar effects as in the branching trough 1, such as the effects of providing the hollow columnar protrusion 27 on the back surface of the bottom plate 5, the reinforcing effects of the side plates 7 by providing the bending structure and the horizontal ribs 19 on the side plates 7, the effects of serving as the vertical ribs 21 of the female joining structure, and effects for fixing the branching trough 1 to paved roads or slopes, can also be obtained in the case of the bent trough 41.

Although the embodiments of the present invention have been described referring to the attached drawings, the technical scope of the present invention is not limited to the embodiments described above. It is obvious that persons skilled in the art can think out various examples of changes or modifications within the scope of the technical idea disclosed in the claims, and it will be understood that they naturally belong to the technical scope of the present invention.

For example, needless to say, the above-mentioned embodiments can be combined with each other. Also, combination of the troughs and the number of the troughs to be disposed in each of the trough lines can be decided accordingly.

### (DESCRIPTION OF NOTATIONS)

- 1: branching trough
- 3: trough lid
- 5: bottom plate
- 7: side plate
- 9: main trunk section
- 11: branching section
- 13: curved part
- 15a, 15b: opening
- 17: elbow section
- 19: horizontal rib
- 21: vertical rib
- 23a, 23b: female joining structure
- 25: leg part
- 27: hollow columnar protrusion
- 29: bottom surface reinforcement rib
- 31: groove
- 33: ground surface
- 35: space
- 37: anchor bolt
- 40: branching trough fixing structure
- 40a: bent trough fixing structure
- 41: bent trough
- 43: trough lid
- 45: bottom plate
- 47: side plate
- 49: opening
- 51: elbow section
- 53: horizontal rib
- 55: vertical rib
- 57a, 57b: female joining structure
- 59: inner curved part
- 61: outer curved part
- 63: groove
- 65: leg part
- 67: hollow columnar protrusion
- 69: bottom surface reinforcement rib
- 71: ground surface
- 73: space
- 75: anchor bolt
- 81: straight trough
- 83, 83a: male joining structure
- 85, 85a: female joining structure
- 87: small-diameter trough
- 90, 90a, 90b, 90c, 90d, 90e, 90f: trough connection structure
- 91: male-male conversion connection adaptor
- 93, 93a, 93b: end plate
- 95, 95a: opening
- 97a: inner connection member
- 97b: outer connection member
- 99: protrusion
- 100, 100a, 100b, 100c: trough line
- 101: rectangular conduit
- 101a: independent corrugated conduit
- 101b: spirally corrugated conduit
- 103: large-diameter part
- 105: small-diameter part
- 107a, 107b: cylindrical part
- 109a, 109b: flange part
- 111: trough lid
- 113: shielding plate
- 115: cable

## Claims

1. A branching trough, comprising:
side plates forming both side surfaces; and
a bottom plate forming a bottom surface, wherein
both the side plates stand upright surrounding the bottom plate;
a cross section of the branching trough is in a U shape;
the bottom plate, which is in a substantially T shape in a plan view, includes a substantially rectangular main trunk section and a branching section being formed on one long side of the main trunk section extending toward a direction orthogonal to a longitudinal direction of the main trunk section with a diameter gradually decreasing into a substantially arc shape;
the side plates are formed of a straight part that is formed on one long side of the main trunk section and curved part forming outer rims of the branching section extending into the substantially arc shape with the reduced diameter;
a female joining structure of an identical structure is formed at an opening at a tip end of the branching section and at each of openings at both end parts of the longitudinal direction of the main trunk section;
the female joining structure is formed in a pair of substantially U shapes facing each other in a plan view, each of the U shapes having substantially parallel vertical ribs that are a prescribed distance apart from each other;
horizontal rib, which also serves as a metal fitting attachment part for attaching a metal fitting for installing a lid, is formed at an upper part of an elbow section of each of the side plates such that the horizontal rib links vertical ribs of the elbow section, the vertical ribs being formed a prescribed distance apart from each other; and
there are no vertical ribs provided on outer sides of the side plates of the substantially arc-shaped curved part.

2. The branching trough according to claim 1, wherein
the female joining structure formed at each of the openings of each of the end parts of the main trunk section is a female joining structure that is formed extending inward in a direction orthogonal to the straight part of the side plates of the main trunk section and to each of the side plates of the curved part;
the female joining structure that is formed at the opening at the tip end of the branching section is a female joining structure that is formed extending inward in a direction orthogonal to the curved part; and
the elbow section formed at each of the main trunk section and the branching section is formed to serve as an inner vertical rib of the female joining structure provided at each end part of each of the openings of the main trunk section and the branching section.

3. The branching trough according to claim 1, wherein
a bottom plate surface of the female joining structure is formed a prescribed height below bottom plate surfaces of parts other than the female joining structure;
leg parts of the side plates of the female joining structure protruding to a back surface of the bottom plate for a prescribed height are formed and the leg parts support the bottom plate the prescribed height above a ground surface, with a space being created on the back surface of the bottom plate;
a hollow columnar protrusion protruding downward from the bottom plate with a prescribed height is formed at a prescribed position in the space created on the back surface of the main trunk section and the branching section;
a top surface of the hollow columnar protrusion is blocked by the bottom plate, or the top surface of the hollow columnar protrusion is opened; and
at least the one hollow columnar protrusion is formed as an anchor bolt fixing part.

4. The branching trough according to claim 2 or 3, wherein
a plurality of parallel bottom surface reinforcement ribs are formed on the back surface of the bottom plate of the substantially T-shaped branching trough, each of the bottom surface reinforcement ribs having a prescribed length and being formed from a position that is a prescribed distance apart from a center of the longitudinal direction of the straight side plate of the main trunk section toward the opening of the branching section that extends in a direction opposite to the position, so as to link the two.

5. A bent trough, comprising:
side plates forming both side surfaces; and
a bottom plate forming a bottom surface, wherein
both the side plates stand upright surrounding the bottom plate;
a cross section of the bent trough is in a U shape;
the bottom plate includes a curved part of a prescribed angle in a prescribed direction in a plan view, and both the side plates, forming an inner curved part and an outer curved part surrounding the curved part of the bottom plate, stand upright and upward from the curved part of the bottom plate so as to form the substantially arc-shaped curved part;
a substantially U-shaped opening is formed at each end part of the side plates;
at an end of the opening at each end part of the side plates and in proximity of the end of the opening at each end part, substantially parallel vertical ribs that extend inward in a direction orthogonal to the curved part and are a prescribed distance apart from each other are formed on both sides of the respective side plates to form a female joining structure, including the vertical ribs, in a pair of mutually facing substantially U-shapes facing each other in a plan view;
on each of the side plates of the inner curved part and the outer curved part, an elbow section, which also serves as a vertical rib protruding inward, is formed at a prescribed position in proximity of the opening and at a prescribed position in the middle of the curved part, in which the positions are a prescribed distance apart from each other;
a horizontal rib, to which a metal fitting attachment part can be attached to install a lid, is formed linking the vertical ribs at an upper part of the elbow section, the elbow section serving as the vertical rib and being formed at the prescribed position in the proximity of the opening and at the prescribed position in the middle of the curved part, in which the positions are the prescribed distance apart from each other; and
the horizontal rib of the outer curved part is formed longer than the horizontal rib of the inner curved part, and there are no vertical ribs provided on outer sides of the respective side plates forming the inner curved part and the outer curved part.

6. The bent trough according to claim 5, wherein
similarly to the openings at the both end parts of the side plates, a different female joining structure is formed at a prescribed position in the middle of the curved part that is a prescribed distance apart from the one end part of the curved part and in proximity of the prescribed position in the middle of the curved part; and
the elbow section provided at the prescribed position in the proximity of the opening serves as the inner vertical rib of the female joining structure in the proximity of the opening, and the elbow section formed at the prescribed position in the middle of the curved part serves as the inner vertical rib of the different female joining structure.

7. The bent trough according to claim 5, wherein
at least a bottom plate surface of the female joining structure formed at each end part of the curved part is formed a prescribed height below bottom plate surfaces of parts other than the female joining structure;
leg parts of the side plates of the female joining structure protruding to a back surface of the bottom plate for a prescribed height are formed, and the leg parts support the bottom plate the prescribed height above a ground surface, with a space being created on the back surface of the bottom plate;
a hollow columnar protrusion protruding downward from the bottom plate with a prescribed height is formed at a prescribed position in the space created on the back surface by the inner curved part and the outer curved part; and
a top surface of the hollow columnar protrusion is blocked by the bottom plate, or the top surface of the hollow columnar protrusion is opened, and at least the one hollow columnar protrusion is formed as an anchor bolt fixing part.

8. The bent trough according to any one of claims 5 to 7, wherein
the bent trough includes in an interior thereof another bending structure having a smaller bending angle than the bending angle before cutting, wherein
with respect to outer vertical ribs of the different female joining structure, in which the vertical ribs with the prescribed height are formed substantially parallel to each other extending inward from the side plates in the direction perpendicular to the bottom plate and the different female joining structure is formed at the prescribed position that is midway between the one end and the other end, which is the prescribed distance apart from the one end, of the curved part formed on both ends of the trough,
the bending structure having the smaller bending angle can be obtained by cutting along the vertical ribs as to connect outer side surfaces of the vertical ribs of the inner curved part and the outer curved part, the vertical ribs being formed perpendicular to curves forming the curved part.

9. A branching trough connection structure, the connection structure comprising:
the branching trough according to claim 1; and
a straight trough having a prescribed length and a main body with a substantially uniform cross-sectional diameter, wherein
a male joining structure of the straight trough is connected to the female joining structure of at least one of the openings of the substantially T-shaped branching trough.

10. A branching trough connection structure, the connection structure comprising:
the branching trough according to claim 1; and
a straight trough having a prescribed length and a main body with a substantially uniform cross-sectional diameter, wherein
a female joining structure of the straight trough is connected to the female joining structure of at least one of the openings of the substantially T-shaped branching trough via a male-male conversion connection adaptor.

11. A branching trough connection structure, the connection structure comprising:
the branching trough according to claim 1; and
the bent trough according to claim 3, wherein
the female joining structure formed at the opening of one of the end parts of the bent trough is connected to the female joining structure of at least one of the openings of the substantially T-shaped branching trough via the male-male conversion connection adaptor.

12. A branching trough connection structure, the connection structure comprising:
the branching trough according to claim 1; and
a small-diameter trough, wherein
a square-shaped end plate is inserted into the female joining structure of at least one of the openings of the substantially T-shaped branching trough, the end plate having a width wider than a distance between the facing vertical ribs of the female joining structure; and
the end plate is in a substantially U shape with an opening of a prescribed size being formed at a lower or upper part thereof;
a male joining structure of the small-diameter trough is disposed at the opening of the end plate so as to be fitted and connected to the opening of the end plate with a flange part of the male joining structure of the small-diameter trough as a stopper structure, thereby fixing the male joining structure of the small-diameter trough to the end plate.

13. A branching trough connection structure, the connection structure comprising:
the branching trough according to claim 1; and
a conduit, wherein
the conduit to be connected to the substantially T-shaped branching trough includes an independent corrugated structure and is either an independent corrugated conduit having a small-diameter part with a circular cross section or a rectangular conduit in which a large-diameter part with a rectangular cross section and a small-diameter part with a circular cross section are alternately formed;
an end plate in a half-split structure, which can be vertically split into halves, is disposed at the female joining structure of any one of the openings of the substantially T-shaped branching trough; and
the end plate has an opening at parts that face each other when being split, and the small-diameter part of the conduit is inserted into and held by the opening of the end plate such that the conduit is fixed to the end plate.

14. A branching trough connection structure, the connection structure comprising:
the branching trough according to claim 1; and
a conduit, wherein
the conduit to be connected to the substantially T-shaped branching trough is a conduit having a spirally corrugated structure with a circular cross section;
an inner connection member and an outer connection member are used, wherein
the inner connection member includes a cylindrical part having a circular cross section and spiral grooves that can fit with an inner peripheral surface of the conduit, and a flange part formed at an end of the cylindrical part; and
the outer connection member includes a cylindrical part having a circular cross section and spiral grooves that can fit with an outer peripheral surface of the conduit, and a flange part formed at an end of the cylindrical part;
the cylindrical part of the inner connection member and the cylindrical part of the outer connection member are screwed together with the inner peripheral surface and the outer peripheral surface of the conduit, respectively, so that the inner connection member and the outer connection member are attached to the end of the conduit; and
the outer connection member is disposed further back from the end of the conduit than the inner connection member, an end plate having an aperture into which the conduit can be inserted through is disposed at the female joining structure at the opening, and the end plate is sandwiched between the flange part of the inner connection member and the flange part of the outer connection member, thereby fixing the conduit.

15. The branching trough connection structure according to any one of claims 12 to 14, wherein
a groove having a prescribed length in a width direction of the trough is formed in substantially middle of a surface of the bottom plate, which is the bottom part of the female joining structure in the substantially U-shapes that are facing each other, and a protrusion that can be fitted into the groove is provided at a tip end of a bottom part of the end plate.

16. A trough line using the branching trough connection structure according to any one of claims 9 to 14, wherein
the trough line of a plurality of interconnected straight troughs, each having a prescribed length, is connected to another opening of the substantially T-shaped branching trough;
the female joining structure at the other opening is connected to either a male joining structure that is disposed at one end of the interconnection structure of the plurality of interconnected straight troughs or a female joining structure that is disposed at the other end of the interconnection structure of the plurality of interconnected straight troughs via the male-male conversion connection adaptor; and
a cable is disposed inside the branching trough to have either a branching structure or a bending structure, and the trough lid is put over the trough line.

17. The trough line according to claim 16, wherein
the bent trough having the female joining structure on each end part is disposed via the male-male conversion connection adaptor in at least a part of the trough line of either the interconnection structure of the straight troughs in which the male joining structure is disposed at the one end, or the interconnection structure of the straight troughs in which the female joining structure is disposed at the other end; and
the cable is disposed inside the branching trough to have either the branching structure or the bending structure, and the trough lid is put over the trough line.

18. The trough line according to claim 16, wherein
the cable disposed inside the troughs forming the trough line has only the bending structure in the branching trough, the cable is disposed on one side of the mutually facing openings, a shielding plate is disposed on the other side of the mutually facing openings, and the cable goes through the remaining opening of the branching section.

19. The trough line according to claim 17, wherein
the cable disposed inside the troughs forming the trough line has only the bending structure in the branching trough, the cable is disposed on one side of the mutually facing openings and at the opening of the branching section, and a shielding plate is disposed on the other side of the mutually facing openings of the branching trough.

20. A branching trough fixing structure, the fixing structure comprising:
the branching trough according to claim 3, wherein
the hollow columnar protrusion protruding downward from the back surface of the bottom plate with the prescribed height is formed as a fixing part for an anchor bolt at a prescribed position in proximity of a substantially center of a border between the main trunk section and the branching section; and
the hollow columnar protrusion has a hollow cylindrical structure, and, by inserting and tightening the anchor bolt into the hollow part of the hollow cylindrical structure, the substantially T-shaped branching trough is fixed to the asphalt or concrete ground.

21. A bent trough fixing structure, the fixing structure comprising:
the bent trough according to claim 7, wherein
the hollow columnar protrusion protruding downward from the back surface of the bottom plate with the prescribed height is formed as a fixing part for an anchor bolt; and
the hollow columnar protrusion has a hollow cylindrical structure, and, by inserting and tightening the anchor bolt into the hollow part of the hollow cylindrical structure, the bent trough is fixed to the asphalt or concrete ground.

22. A method for connecting a cable protection member to the branching trough according to claim 1, wherein
to a space between both the substantially parallel end faces formed by the vertical ribs in the female joining structure formed of the substantially parallel vertical ribs that have the prescribed height and are formed extending inwardly from the side plate in a perpendicular direction and facing each other at the end part of at least one of the three openings of the branching trough and at a position in proximity of the end part of the opening that is a prescribed distance apart from the end part of the opening,
either the flange part of the male joining structure of the trough is directly fixed, the female joining structure of the trough is fixed via the male-male conversion connection adaptor, the flange part of the male joining structure of the small-diameter trough is fixed via the end plate, the small-diameter part of the independent corrugated conduit having the circular or rectangular cross section is fixed by being placed between the end plates, or the end part of the spirally corrugated conduit is fixed by screwing the inner connection member and the outer connection member via the end plate and sandwiching the end plate between the flange part of the inner connection member and the flange part of the outer connection member.
